# EUROPEAN PATENT APPLICATION

(11) **EP 1 699 204 A1**
(43) Date of publication of application: **06.09.2006**
(21) Application number: 06004003.7
(22) Date of filing: 28.02.2006
(51) Int. Cl.: H04L 29/06

(54) **Decryption apparatus for use in encrypted communications**

(30) Priority: 01.03.2005 JP 2005055984
(71) Applicant: MATSUSHITA ELECTRIC WORKS, LTD., Kadoma-shi, Osaka (JP)
(72) Inventor: Akimoto, Masao Matsushita Electric Works, Ltd., Kadoma-shi Osaka (JP)
(74) Representative: Samson & Partner

(57) **Abstract**

A decryption apparatus for use in encrypted communications is installed between a first communications apparatus and a second communications apparatus to transmit and receive encrypted packets therebetween and allowing a monitoring apparatus to monitor contents of the transmitted and received packets. The decryption apparatus includes a storage unit, a relay unit and an output unit. The storage unit stores first key information, second key information, and an encryption algorithm using the first and the second key data. The relay unit decrypts a first and a second packet received from the first and the second communications apparatus by using the first and the second key information and encrypting a decrypted first and second packet by using the second and the first key information according to the encryption algorithm and then transmitting an encrypted first and the second packet to the second and the first communications apparatus.

## Description

### Field of the Invention

The present invention relates to a decryption apparatus for use in encrypted communications using, for example, Internet Protocol (IP), capable of encrypting a packet of communications data to avoid a wiretapping or a forgery of the data and at the same time capable of performing an authentication between a transmitter and a receiver by using authentication data; and, more particularly, to a decryption apparatus for use in encrypted communications, capable of monitoring communications to detect illegitimate programs such as viruses and worms and prevent any intrusion, information leakage, and so forth, to thereby improve security of communications data.

### Background of the Invention

Conventionally, an IDS (Intrusion Detection System), an IPS (Intrusion Protection System), a monitoring system employing a virus wall or a content filter, and the like are known as a communications monitoring system for detecting illegitimate programs such as viruses and worms and preventing any intrusion, information leakage, and so forth.

Among these security techniques, a web washer SSL scanner or an invention disclosed in Japanese Patent Laid-open Application No. 10-93557 (hereinafter, referred to as "Reference 1") is known as a product for SSL (Secure Sockets Layer), which is one of the protocols for encrypted communications. These products include techniques for decrypting application data by interrupting SSL communications after accessing an SSL communications path and then verifying the data to be relayed.

However, although it is possible to decrypt and monitor encrypted communications data and detect a defect thereof in accordance with the above-mentioned techniques, they have a drawback in that an existing intrusion detection system becomes unavailable to be reused, because the above-mentioned techniques are configured such that a detection system and a decryption system for the communications data are integrated as a single system. Accordingly, even in case where an IPS or IDS is already installed, an additional decryption apparatus and monitoring apparatus are needed to monitor encrypted communications data.

Moreover, although the communications monitoring apparatus disclosed in Reference 1 decrypts and monitors contents of a packet, it does not re-encrypt the decrypted packet before relaying it. Thus, the security level of the encrypted communications is deteriorated.

### Summary of the Invention

It is, therefore, an object of the present invention to provide a decryption apparatus for use in encrypted communications, capable of allowing encrypted communications data to be monitored by an existing communications monitoring apparatus without deteriorating the security level of the encrypted communications.

In accordance with one aspect of the present invention, there is provided a decryption apparatus for use in encrypted communications installed between a first communications apparatus and a second communications apparatus to transmit and receive encrypted packets therebetween and allowing a monitoring apparatus to monitor contents of the transmitted and received packets.

The decryption apparatus has a storage unit for storing first key information for decrypting a packet transmitted from the first communications apparatus and encrypting a packet to be transmitted thereto, second key information for decrypting a packet received from the second communications apparatus and encrypting a packet to be transmitted thereto, and an encryption algorithm using the first and the second key information. Further, the decryption apparatus has a relay unit for decrypting a first packet received from the first communications apparatus by using the first key information and encrypting a decrypted first packet by using the second key information according to the encryption algorithm and then transmitting an encrypted first packet to the second communications apparatus, and decrypting a second packet received from the second communications apparatus by using the second key information and encrypting a decrypted second packet by using the first key information according to the encryption algorithm and then transmitting an encrypted second packet to the first communications.

The decryption apparatus has an output unit for standardizing a decrypted packet produced by the relay unit to provide the monitoring apparatus with a standardized decrypted packet of a form capable of being processed by the monitoring apparatus, thereby allowing the monitoring apparatus to monitor contents of the standardized decrypted packet. Thus, the above-mentioned object can be achieved.

In accordance with another aspect of the present invention, there is provided a decryption apparatus for use in encrypted communications, wherein the decryption apparatus intercepts encrypted packets transmitted and received between a first communications apparatus and a second communications apparatus through a relay apparatus installed on a communications path therebetween to have a monitoring apparatus monitor contents of the encrypted packets.

The decryption apparatus has a storage unit for storing first key information for decrypting a packet sent from the first communications apparatus to the second communications apparatus, second key information for decrypting a packet sent from the second communications apparatus to the first communications apparatus, and an encryption algorithm using the first and the second key information. Further, the decryption apparatus has a decryption unit for decrypting the packet received from the first communications apparatus by using the first key information according to the encryption algorithm, and decrypting the packet received from the second communications apparatus by using the second key information according to the encryption algorithm.

The decryption apparatus has an output unit for standardizing a decrypted packet produced by the decryption unit to provide the monitoring apparatus with a standardized packet of a form capable of being processed by the monitoring apparatus, thereby allowing the monitoring apparatus to monitor contents of the standardized packet. Thus, the above-mentioned object can be achieved.

### Brief Description of the Drawings

The above and other objects and features of the present invention will become apparent from the following description of preferred embodiments given in conjunction with the accompanying drawings, in which:
Fig. 1 shows a block diagram depicting a configuration of a communications system in accordance with a first preferred embodiment of the present invention;
Fig. 2 illustrates a block diagram describing a configuration of a decryption apparatus in accordance with the first preferred embodiment of the present invention;
Fig. 3 depicts a flow chart explaining an overall process in accordance with the first preferred embodiment of the present invention;
Fig. 4. describes a flow chart illustrating an IKE process performed by the decryption apparatus in the communications system in accordance with the first preferred embodiment of the present invention;
Fig. 5 provides a flow chart showing an ESP process performed by the decryption apparatus in the communications system in accordance with the first preferred embodiment of the present invention;
Fig. 6 describes messages exchanged among an initiator, a decryption apparatus and a responder in the IKE process in the communications system in accordance with the first preferred embodiment of the present invention;
Figs. 7A and 7B represent a conceptual diagram for describing a process for standardizing a packet by the decryption apparatus in accordance with the first preferred embodiment of the present invention, in which Fig. 7A represents a process performed when a received packet is of a transport mode of ESP and Fig. 7B depicts a process performed when a received packet is of a tunnel mode of ESP.
Fig. 8 shows a block diagram depicting a configuration of a communications system in accordance with a second preferred embodiment of the present invention;
Fig. 9 illustrates a block diagram showing a configuration of a decryption apparatus in accordance with the second preferred embodiment of the present invention;
Fig. 10 depicts a flow chart describing an overall process in accordance with the second preferred embodiment of the present invention;
Fig. 11 describes a flow chart depicting an ESP process performed by the decryption apparatus in accordance with the second preferred embodiment of the present invention;
Fig. 12 provides a flow chart illustrating a plain text process performed by the decryption apparatus in accordance with the second preferred embodiment of the present invention;
Fig. 13 presents a block diagram showing a configuration of a communications system in accordance with a third preferred embodiment of the present invention;
Fig. 14 represents a decryption apparatus illustrating a configuration of a communications system in accordance with the third preferred embodiment of the present invention;
Fig. 15 shows a conceptual diagram for describing a process for standardizing a packet by the decryption apparatus in accordance with a third preferred embodiment of the present invention;
Fig. 16 illustrates a flow chart explaining an overall process in accordance with the third preferred embodiment of the present invention;
Fig. 17 depicts a flow chart showing a record process performed by the decryption apparatus in accordance with the third preferred embodiment of the present invention;
Fig. 18 describes messages exchanged between an SSL client and an SSL server in a handshake process in the communications system in accordance with the first preferred embodiment of the present invention; and
Fig. 19 shows messages exchanged between the SSL client and the SSL server in a session restart process in the communications system in accordance with the first preferred embodiment of the present invention.

### Preferred Embodiments of the present invention

Hereinafter, a first to a third preferred embodiment of the present invention will be described with reference to the accompanying drawings.

### (First Embodiment)

In accordance with a first preferred embodiment of the present invention, a decryption apparatus for encrypted communications (hereinafter, simply referred to as "decryption apparatus") is connected to a communications path of the encrypted communications to obtain and relay communications data being transmitted on the communications path. In this communications system, when relaying the communications data by the decryption apparatus, encrypted communications data is decrypted, the decrypted communications data is standardized into a data format capable of being processed by a monitoring apparatus, and the standardized data is undergone through an investigation upon the legitimacy of the data. Then, if the communications data is found to be legitimate through the monitoring process, the decrypted communications data is re-encrypted by the decryption apparatus and is sent to a data destination. Thereby, it is possible to monitor to detect an illegitimate program such as a virus or a worm and prevent any intrusion, leakage of information, or the like that may occur on the communications path between encrypted communications devices.

Further, in accordance with this communications system, since the standardization of the communications data is performed in the decryption apparatus for decrypting the encrypted communications data, the decryption apparatus can be configured to be separated from a monitoring apparatus. Therefore, it is possible to make use of an existing monitoring apparatus.

Besides, in this communications system, the communications data once decrypted to be subjected to a monitoring process is re-encrypted by the decryption apparatus before being relayed to the destination, thereby making encrypted communications transparent. Accordingly, as for the communications devices for performing communications on the encrypted communications path, it becomes unnecessary to change their current settings for the existing communications process. Furthermore, the security level of the existing encrypted communications can be maintained without being deteriorated.

### (Configuration of the Communications System)

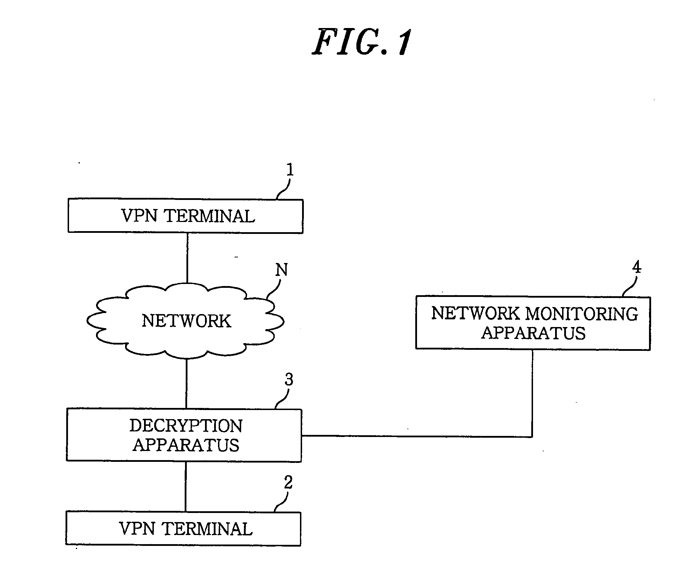

The communications system in accordance with the first embodiment is applied to, for example, a communications system in which a virtual private network (VPN) session is constructed via a decryption apparatus 3 between VPN terminals 1 and 2 (a first communications apparatus and a second communications apparatus), as shown in Fig. 1. In this communications system, when performing communications from the VPN terminal 1 to the VPN terminal 2 via a network N, a VPN session in accordance with an IP Security Protocol (IPsec) is constructed between the VPN terminals 1 and 2 to prevent any wiretapping or source address forging on the network N, to thereby maintain the security level of the communications data. Also, in this communications system, communications data is outputted to a network monitoring apparatus 4 after being decrypted by the decryption apparatus 3, whereby the network monitoring apparatus 4 is allowed to monitor the communications contents, while controlling a relaying operation of the decryption apparatus 3.

In this communications system, the VPN terminal 2, the decryption apparatus 3 and the network monitoring apparatus 4 are connected via an IP-based local area network (LAN). Further, the network N refers to, for example, an IP network available in public.

In case of transmitting packets by encrypting them, the VPN terminals 1 and 2 perform processes in accordance with IKE (Internet Key Exchange), i.e., IKE processes, to construct an interactive VPN session therebetween, and store common keys (hereinafter, referred to as "session keys"), which serve as information for use in encrypting and decrypting communications data. Further, the VPN terminals 1 and 2 generate packets by performing processes based on IPsec that is a security protocol for a network layer. Specifically, the VPN terminals 1 and 2 perform processes in accordance with, for example, an ESP Protocol, for generating an ESP, i.e., IP encapsulating security payload, referred to as ESP processes.

The decryption apparatus 3 receives data transmitted from the VPN terminal 1 or 2 when the IKE processes and the ESP processes are being executed in the VPN terminals 1 or 2.

Then, the decryption apparatus 3 relays the packets sent and received between the VPN terminals 1 and 2 by conducting a predetermined process to be described later. Also, the decryption apparatus 3 decrypts communications data encrypted in accordance with ESP, i.e., payload portions of ESP packets, standardizes the decrypted communications data into an IP packet having a data structure receivable by the network monitoring apparatus 4, and then outputs the IP packet to the network monitoring apparatus 4.

If the IP packet is received, the network monitoring apparatus 4 analyzes the contents of the IP packet to find whether or not the communications data sent and received between the VPN terminals 1 and 2 is legitimate by investigating, for example, whether or not the packet includes a virus or a worm. If the communications data is found to be illegitimate, the network monitoring apparatus 4 notifies a network manager or the like of the fact.

As for the packet communications between the VPN terminals 1 and 2, the communications system with the above-described configuration conducts various processes including decryption, reading, contents storage, modification, encryption, and transmission of the ESP packet by using the decryption apparatus 3. Accordingly, in accordance with the communications system of the present invention, by intercepting the communications between the VPN terminals 1 and 2, it becomes possible to have the contents of the encrypted communications to be monitored by the network monitoring apparatus 4, while the VPN terminals 1 and 2 performing conventional processes.

The following description will be provided for the case of performing a mutual authentication by using a pre-shared key as a main procedure among various procedures defined based on RFC (Request For Comments) 2409, with some procedures omitted for the simplicity of explanation. Hereinafter, a secret key and a public key refer to those in accordance with Diffie-Hellman key sharing method defined based on RFC2631. In the description, explanation of a method for process an error, such as an input of unexpected data, will be omitted.

### (Configuration of the Decryption Apparatus 3)

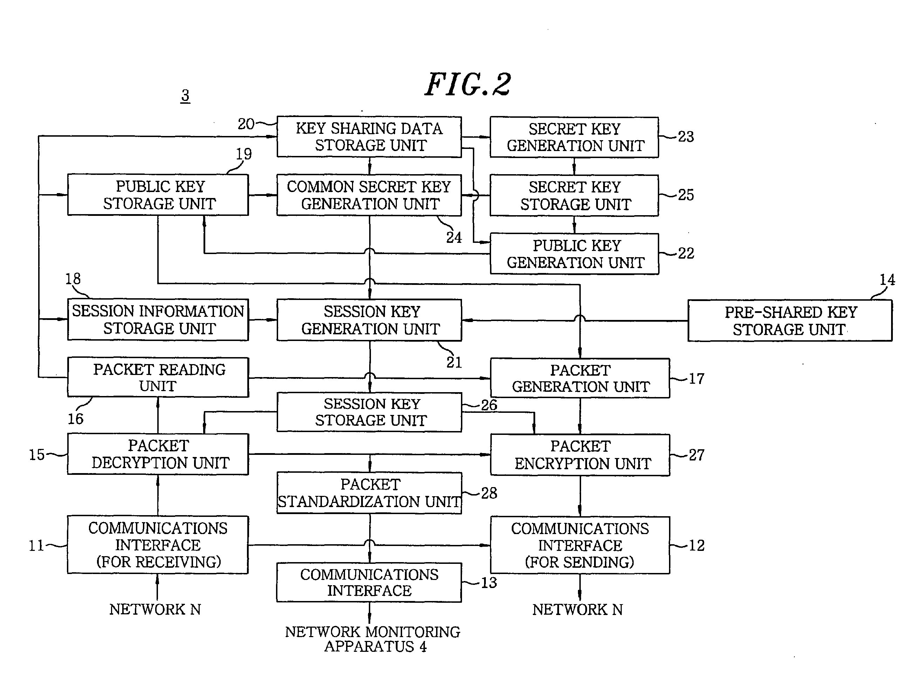

Below, a functional configuration of the decryption apparatus 3 for use in the above-described communications system will be explained with reference to Fig. 2.

Further, in the following description, an initiating one of the VPN terminals 1 and 2 included in the VPN session will be referred to as an initiator (initiating communications apparatus), whereas the other of the VPN terminals 1 and 2 that responds to the initiator will be referred to as a responder (responding communications apparatus). Further, each unit of the decryption apparatus 3 to be described below corresponds to a corresponding functional part obtained by a CPU executing, e.g., a program for controlling IKE or ESP based communications stored in a ROM or the like, an interface circuit, or a corresponding component implemented by a hard disc device.

The decryption apparatus 3 is connected to the network N and the network monitoring apparatus 4 as described above to transfer an IP packet via the network N and, at the same time, to transmit a LAN frame or an IP packet receivable by the network monitoring apparatus 4 to the network monitoring apparatus 4. The decryption apparatus 3 intercepts an IP packet sent and received between the VPN terminals 1 and 2 via the network N and then standardizes it into a data format that can be analyzed by the network monitoring apparatus 4.

The decryption apparatus 3 includes a communications interface 11 for receiving data, a communications interface 12 for sending data, and a communications interface 13 serving as an interface between the network monitoring apparatus 4.

Although the communications interfaces 11 and 12 are respectively described as those for receiving and sending data for the simplicity of explanation, an actual configuration is such that one of the two interfaces is fixedly connected to the VPN terminal 2 whereas the other is fixedly connected to the network N. That is, in case a packet is received from the VPN terminal 2, the communications interface 11 is connected as the interface to the VPN terminal 2, whereas the other communications interface 12 is connected as the interface to the network N. On the other hand, in case a packet is received from the network N, the communications interface 11 is connected as the interface to the network N whereas the other communications interface 12 is connected as the interface to the VPN terminal 2.

Moreover, the decryption apparatus 3 has a pre-shared key storage unit 14 for storing therein a pre-shared key previously set between the VPN terminals 1 and 2 for constructing the VPN session. The pre-shared key stored in the pre-shared key storage unit 14 is inputted by, e.g., a network administrator's manipulation of a key board. Also, the decryption apparatus 3 sets information for use in constructing the VPN session as well as performing the function of storing the pre-shared key.

Moreover, the decryption apparatus 3 has a packet decryption unit 15 for decrypting communications data sent and received between the VPN terminals 1 and 2; and a packet standardization unit 28 for standardizing the decrypted communications contents into a data format of an IP packet to be outputted by the decryption apparatus 3 to the network monitoring apparatus 4 via the interface 13, thus allowing the network monitoring apparatus 4 to investigate the communications contents.

If a packet containing encrypted data is received by the communications interface 11, the decryption apparatus 3 decrypts the encrypted data by means of the packet decryption unit 15 to send the decrypted data to a packet reading unit 16. On the contrary, if a packet received by the communications interface 11 does not contain encrypted data, the data of the packet is directly sent to the packet reading unit 16. Then, the packet reading unit 16 reads the contents of the data in a plain text form to extract necessary data therefrom and sends the necessary data to a packet generation unit 17, a session information storage unit 18, a public key storage unit 19 or a key sharing data storage unit 20.

Various information transferred when an IKE process is performed between the VPN terminals 1 and 2 is stored in the session information storage unit 18 as session information. The session information of the initiator and the responder stored in the session information storage unit 18 is read out when a session key is generated in a session key generation unit 21.

The public key storage unit 19 stores therein public keys of the initiator and the responder (an initiator's public key received from the initiator and a responder's public key received from the responder) sent from the packet reading unit 16 and also stores therein the initiator's side public key and the responder's side public key generated by a public key generation unit 22. The public keys of the initiator and the responder stored in the public key storage unit 19 are read out when a common secret key is generated by a common secret key generation unit 24. Further, the initiator's side and the responder's side public key are also read out by the packet generation unit 17 when they are sent to the initiator and the responder, respectively.

In addition, the decryption apparatus 3 generates the initiator's side public key on behalf of the responder, and that key is equivalent to the public key of the responder. Then, the decryption apparatus 3 generates the responder's side public key on behalf of the initiator, and that key is equivalent to the public key of the initiator.

When a plurality of IKESAs are proposed by the initiator, the key sharing data storage unit 20 stores a group description attribute value of a transform payload in a proposal payload included in a valid IKESA, i.e., a selected one of the IKESAs that is selected by the responder. The information stored in the key sharing data storage unit 20 is read out when a secret key is generated by a secret key generation unit 23 as well as when the common secret key is generated by the common secret key generation unit 24.

The secret key generation unit 23 generates an initiator's side secret key and a responder's side secret key, and stores thus generated secret keys in a secret key storage unit 25. At this time, the secret key generation unit 23 determines the types of the secret keys by referring to the group description attribute value stored in the key sharing data storage unit 20.

In addition, the decryption apparatus 3 generates the initiator's side secret key on behalf of the responder, and that key is equivalent to the secret key of the responder. Then, the decryption apparatus 3 generates the responder's side secret key on behalf of the initiator, and that key is equivalent to the secret key of the initiator.

The public key generation unit 22 generates the responder's side public key by using the responder's side secret key stored in the secret key storage unit 25 and an Oakley group value related to the group description attribute value stored in the key sharing data storage unit 20, and at the same time generates the initiator's side public key by using the initiator's side secret key stored in the secret key storage unit 25 and the Oakley group value related to the group description attribute value stored in the key sharing data storage unit 20. Thus, generated public keys of the initiator and the responder are stored in the public key storage unit 19. Accordingly, it becomes possible for the packet generation unit 17 to read the public keys of the initiator and the responder when the public keys are sent to the initiator and the responder, respectively.

The common secret key generation unit 24 generates a common secret key of the initiator (an initiator's side common secret key) by using the public key of the initiator stored in the public key storage unit 19, the initiator's side secret key stored in the secret key storage unit 25 and the Oakley group value related to the group description property value stored in the key sharing data storage unit 20. Also, the common secret key generation unit 24 generates a common secret key of the responder (a responder's side common secret key) by using the public key of the responder, the responder's side secret key and the Oakley group value. Then, the common secret key generation unit 24 outputs thus generated common secret keys of the initiator and the responder to the session key generation unit 21.

If the common secret keys of the initiator and the responder are inputted from the common secret key generation unit 24, the session key generation unit 21 generates a SKEYID by using the pre-shared key stored in the pre-shared key storage unit 14, referring to the session information stored in the session information storage unit 18. Then, the session key generation unit 21 generates session keys of the initiator and the responder, respectively, by using thus generated SKEYID, the common secret keys of the initiator and the responder stored in the common secret key generation unit 24, referring to the session information stored in the session information storage unit 18. Thus generated session keys of the initiator and the responder are stored in the session key storage unit 26.

In the decryption apparatus 3 configured as described above, in case of sending a packet to the responder or the initiator, the packet generation unit 17 generates a packet by recognizing information to be stored in the packet based on information provided from the packet reading unit 16. Further, if the packet generated by the packet generation unit 17 needs to be encrypted, the decryption apparatus 3 reads the session keys stored in the session key storage unit 26 and encrypts the packet by means of the packet encryption unit 27. Then, the decryption apparatus sends the encrypted packet through the communications interface 12.

Further, upon the completion of an IKE process to be described later for compromising and determining a session key and/or an encryption algorithm, the decryption apparatus 3 has the network monitoring apparatus 4 to monitor the contents of the encrypted communications between the VPN terminals 1 and 2 by using the session key determined through the IKE process. At this time, the packet standardization unit 28 standardizes the packet decrypted by the packet decryption unit 15 with the session key into a data format receivable and analyzable by the network monitoring apparatus 4, and outputs thus standardized packet to the network monitoring apparatus 4 from the communications interface 13. Through this operation, the decryption apparatus 3 has the contents of the encrypted communications between the VPN terminals 1 and 2 monitored by the network monitoring apparatus 4.

Below, detailed description of the process performed by the decryption apparatus 3 will be provided.

### (Operation of the Decryption Apparatus 3)

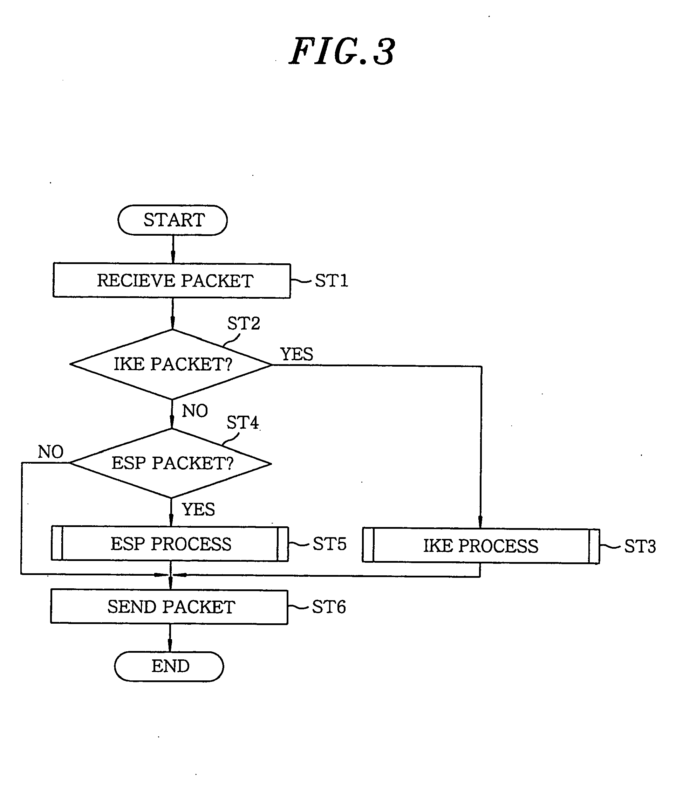

Hereinafter, an operation of the decryption apparatus 3 having the above-described configuration will be explained with reference to Figs. 3 to 6.

### (Overall Operation)

An overall operation of the decryption apparatus 3 will be first explained. Referring to Fig. 3, if a packet is received from the VPN terminal 1 or 2 (step ST1), the decryption apparatus 3 determines whether the received packet is an IKE packet, i.e., a packet for the IKE process (step ST2). At this time, the packet reading unit 16 of the decryption apparatus 3 decides the type of the received packet by referring to a header of a lower protocol such as IP contained in the packet. Then, if it is found that the received packet is an IKE packet, the decryption apparatus 3 performs step ST3, while it proceeds to step ST4 when it is determined that the received packet is not an IKE packet.

In step ST3, before conducting data communications between the VPN terminals 1 and 2, the decryption apparatus 3 performs the IKE process for constructing a VPN session through a key exchange. The IKE process is for generating IKE session keys and ESP session keys of the VPN terminals 1 and 2 by performing a process defined by RFC2409. Herein, in the IKE process, the key exchange is conducted in accordance with Internet Security Association Key Management (ISAKMP) defined by RFC2408.

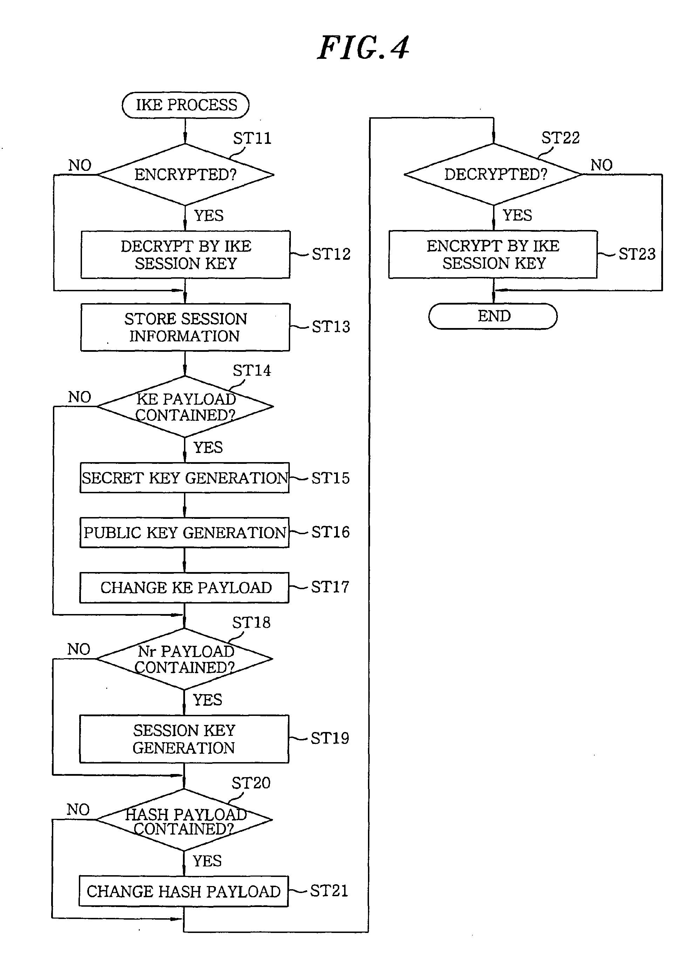

Further, every time a packet is received in step ST1, the decryption apparatus 3 performs step ST3 for conducting the IKE process as described in Fig. 4. After performing the IKE process in step ST3, the decryption apparatus 3 proceeds to step ST6 to send a packet generated by the IKE process to the VPN terminal 1 or 2, and then terminates the process. The IKE process shown in Fig. 4 will be described later in detail.

In step ST4, the decryption apparatus 3 determines whether or not the packet received in step ST1 is an ESP packet. At this time, the packet reading unit 16 of the decryption apparatus 3 decides the type of the received packet by referring to header information or the like contained in the packet. If the received packet is found to be an ESP packet, the decryption apparatus 3 proceeds to step ST5, while it performs step ST6 in case the received packet is found to be not an ESP packet.

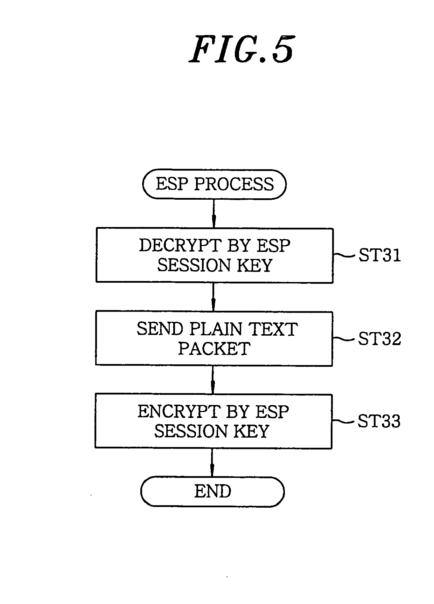

In step ST5, the decryption apparatus 3 performs an ESP process as described in Fig. 5, and in step ST6, the decryption apparatus 3 sends a packet generated by the ESP process to the VPN terminal 1 or 2. The ESP process shown in Fig. 5 will be described later in detail. Further, in step ST6, if the packet to be sent has a checksum field, the checksum field is updated with a recalculated value.

### (IKE Process)

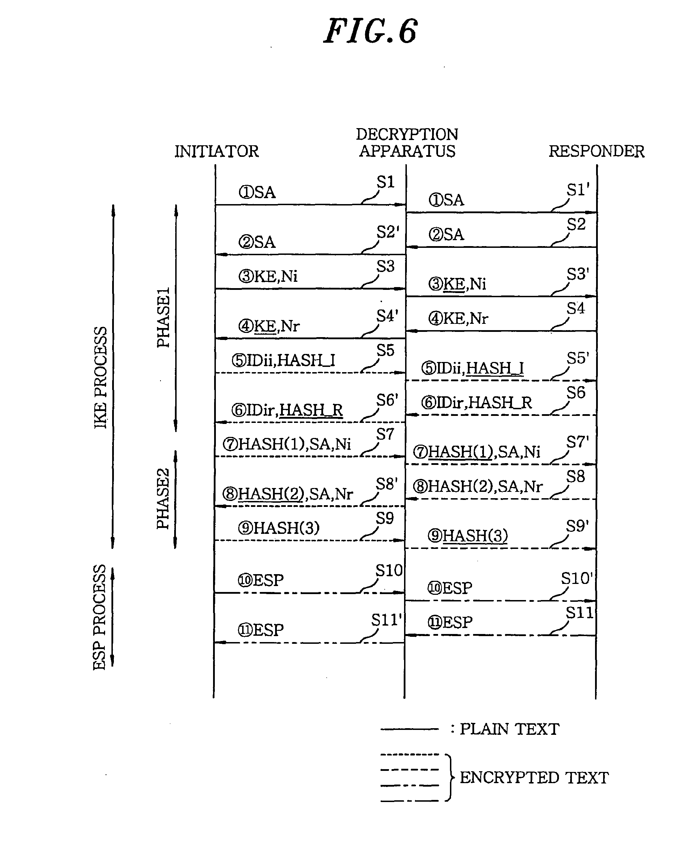

Below, the IKE process in step ST3 will be explained in detail in connection with Figs. 4 to 6. The IKE process includes a first to a ninth process marked by process Nos. ① to ⑨ in Fig. 6.

The IKE process has a first and a phase 2. In phase 1 of the IKE process, authentication of communications partners and exchange of session keys for use in the IKE process (hereinafter, referred to as "IKE session keys") are carried out between the VPN terminals 1 and 2.

Further, phase 1 of the IKE process has two modes: one is a main mode for encrypting respective IDs of an initiator and a responder, and the other is an aggressive mode which is simpler than the main mode because no encryption of IDs is conducted. Either one of the two modes is performed. In the first embodiment, phase 1 will be described for the case of setting the VPN terminal 1 as an initiator, the VPN terminal 2 as a responder, and phase 1 as a main mode.

### (First Process)

In phase 1 of the IKE process, the initiator sends a packet containing an SA (Security Association) payload as an IKE packet S1, wherein the destination of the packet is set to be the responder. The SA payload contains at least one of the following: an encryption algorithm for encrypting data, a hash algorithm for generating, e.g., a message authentication code, a method of mutual authentication, prime numbers necessary to generate a key (Oakley group), information upon a term of validity of a session key, and so forth (hereinafter, these data will be referred to IKESA).

Then, the decryption apparatus 3 receives the IKE packet S1 via the communications interface 11 (step ST1), and detects that the received packet is an IKE packet (step ST2). Thereafter, the decryption apparatus 3 performs the IKE process described in Fig. 4 (step ST3).

In this IKE process, the IKE packet S1 received by the communications interface 11 is inputted to the packet decryption unit 15 (step ST11). The packet decryption unit 15 determines whether or not the data contained in the IKE packet S1 is encrypted by investigating whether an encryption bit E is stored in a flag field of an ISAKMP header of the IKE packet S1. Herein, since the data contained in the IKE packet S1 containing the SA payload is not encrypted, the IKE packet S1 is directly outputted to the packet reading unit 16 from the packet decryption unit 15 without being decrypted. Then, the process proceeds to step ST13.

In step ST13, the packet reading unit 16 extracts an SA payload value and an initiator cookie of the ISAKMP header from the IKE packet S1. Thus extracted data is stored in the session information storage unit 18.

Thereafter, the packet reading unit 16 determines whether or not the IKE packet S1 contains a key exchange payload KE (step ST14), a random number payload Nr (step ST18) or a hash payload (step ST20) located behind the ISAKMP header. Then, since the IKE packet S1 contains none of the key exchange payload, the random number payload and the hash payload, the packet reading unit 16 proceeds to step ST22, while skipping steps ST15 to ST 17 and ST 19.

Afterwards, the packet reading unit 16 decides whether the IKE packet S1 is decrypted through the process in step ST12 (step ST22). In this case, since the IKE packet S1 is not decrypted, the process by the packet reading unit 16 is terminated. Then, the decryption apparatus 3 outputs the IKE packet S1 received in step ST1 to the packet generation unit 17 from the packet reading unit 16. Then, it sends the packet S1 to the responder from the communications interface 12 without encrypting the packet S1 by the packet encryption unit 27.

Thus, the responder receives the IKE packet S1. After receiving the IKE packet S1, the responder selects one of the IKESAs (hereinafter, referred to as "valid IKESA") from the IKESA data contained in the SA payload of the IKE packet S1. Then, the responder generates an IKE packet S2 having an SA payload containing the valid IKESA, and then sends the packet S2 by setting the destination of the packet S2 to be the initiator.

### (Second Process)

Subsequently, the decryption apparatus 3 receives the IKE packet S2, which is provided from the responder, via the communications interface 11 (step ST1), and detects that the received packet S2 is an IKE packet (step ST2). Then, the decryption apparatus 3 performs the IKE process described in Fig. 4 (step ST3).

In the IKE process, the IKE packet S2 received by the communications interface 11 is inputted to the packet decryption unit 15, and the packet decryption unit 15 determines whether or not the data contained in the IKE packet S2 is encrypted by investigating whether an encryption bit E is stored in a flag field of an ISAKMP header of the IKE packet S2 (step ST11). In this case, since the IKE packet S2 containing the valid IKESA is not encrypted, the IKE packet S2 is outputted to the packet reading unit 16 from the packet decryption unit 15 without being decrypted. Then, the process proceeds to step ST13.

In step ST13, the packet reading unit 16 extracts a responder cookie of the ISAKMP header and the valid IKESA contained in the SA payload from the IKE packet S2. Thus extracted data is stored in the session information storage unit 18. Further, the packet reading unit 16 stores a group attribute value of a transform payload within a proposal payload contained in the valid IKESA in the key sharing data storage unit 20.

Thereafter, the packet reading unit 16 determines whether or not the IKE packet S2 has a key exchange payload (step ST14), a random number payload Nr (step ST18) or a hash payload (step ST20) located behind the ISKAMP header. Since the IKE packet S2 contains none of the key exchange payload, the random number payload and the hash payload, the packet reading unit 16 proceeds to step ST22, skipping steps ST15 to ST 17, ST 19 and ST 21.

Afterwards, the packet reading unit 16 decides whether the IKE packet S2 is decrypted through the process in step ST12 (step ST22). In this case, since the IKE packet S2 is not decrypted, the process by the packet reading unit 16 is terminated. Then, the decryption apparatus 3 outputs the IKE packet S12 received in step ST1 to the packet generation unit 17 from the packet reading unit 16. Then, the decryption apparatus 3 sends the packet S2 to the initiator from the communications interface 12 without encrypting the packet S2 by the packet encryption unit 27.

Thus, the initiator receives the IKE packet S2. After receiving the IKE packet S2, the initiator recognizes the IKESA contained in the SA payload of the IKE packet S2 as a valid IKESA.

Thus, with the valid IKESA stored, the initiator, the responder and the decryption apparatus 3 can complete the negotiation of the contents of IKESA representing an encryption algorithm, a hash algorithm, or the like for use in the IKE process. Then, the communications system proceeds to a key exchanging process.

That is to say, the initiator creates a secret key x by generating a random number. Then, by using thus generated secret key x, a prime number p and a primitive element g represented by the attribute value of the group description of the transform payload in the proposal payload contained in the valid IKESA, the initiator generates a public key g^{x} mod p to create a key exchange payload KE containing the public key g^{x} mod p.

Moreover, the initiator generates a random number payload Ni containing an additionally generated random number Ni_b. Then, the initiator generates an IKE packet S3 containing the key exchange payload KE and the random number payload Ni, and sends the IKE packet S3 by setting the destination of the IKE packet S3 to be the responder. In IKE, the primitive element g is 2. Further, in the following description, the public key g^{x} mod p of the initiator will be simply expressed as a public key g^{x}. Further, a public key of the responder and a common secret key will also be abbreviated by omitting the notation "mod p" in the following description.

### (Third Process)

Then, if the IKE packet S3 is sent from the initiator, the decryption apparatus 3 receives the IKE packet S3 via the communications interface 11 (step ST1), and detects that the received packet S3 is an IKE packet (step ST2). Thereafter, the decryption apparatus 3 performs the IKE process described in Fig. 4 (step ST3).

In the IKE process, the packet decryption unit 15 determines whether or not the data contained in the IKE packet S3 received via the communications interface 11 is encrypted (step ST11). In this case, since the IKE packet S3 is not encrypted, the IKE packet S3 is outputted from the packet decryption unit 15 to the packet reading unit 16 without being decrypted, and the process proceeds to step ST13.

In step ST13, the packet reading unit 16 extracts the public key g^{x} of the initiator from the key exchange payload KE of the IKE packet S3 and stores the public key g^{x} in the public key storage unit 19. At the same time, the packet reading unit 16 extracts the random number Ni_b from the random number payload Ni of the IKE packet S3 and stores it in the session information storage unit 18.

Subsequently, the packet reading unit 16 determines whether the IKE packet S3 has a key exchange payload KE located behind an ISAKMP header thereof (step ST14). In this case, since the IKE packet S3 contains the key exchange payload KE, steps ST15 to ST17 are performed.

In step ST15, the secret key generation unit 23 generates the responder's side secret key x' and stores thus generated secret key x' in the secret key storage unit 25. Then, in step ST16, the public key generation unit 22 generates the responder's side public key g^{x'} from the responder's side secret key x' stored in the secret key storage unit 25, and stores thus generated public key g^{x'} in the public key storage unit 19. Afterwards, in step ST17, the packet generation unit 17 creates an IKE packet S3' by replacing the public key g^{x} of the initiator contained in the IKE packet S3 received in step ST1 with the responder's side public key g^{x}' stored in the public key storage unit 19.

Thereafter, the packet reading unit 16 determines whether the IKE packet S3 has a random number payload Nr (step ST18) or a hash payload (step ST20). In this case, since the IKE packet S3 has neither of the random number payload Nr and the hash payload, the process proceeds to step ST22, while skipping steps ST19 and ST21.

Subsequently, the packet reading unit 16 determines whether the IKE packet S3 is decrypted through the process in step ST12. In this case, since the packet S3 is not decrypted, the process by the packet reading unit 16 is terminated.

Then, the decryption apparatus 3 sends the IKE packet S3' created in step ST17 to the responder through the communications interface 12 without encrypting it by the packet encryption unit 27 (step ST6).

Thus, if the responder receives the IKE packet S3', it generates a random number to create a secret key y, as the initiator has done. Then, the responder generates a public key g^{Y} mod p by using the secret key y, and creates an IKE packet S4 including a key exchange payload containing the public key g^{y} and a random number payload Nr containing an additionally generated random number Nr_b. Then, the responder sends the IKE packet S4 by setting the initiator as a destination of the packet S4.

Moreover, the responder generates a SKEYID by using the pre-shared key, the random number Ni_b of the initiator contained in the random number payload Ni of the received IKE packet S3' and its own random number Nr_b. Then, the responder executes an operation to create a common secret key g^{x' y} = (g^{x'})^{y} from the secret key y and the public key g^{x'} for the responder's side. Afterwards, the responder generates an SKEYID_d, an SKEYID_a, and an SKEYID_e by using the SKEYID, the common secret key g^{x'y}, and the cookies of the initiator and the responder.

### (Fourth Process)

Thereafter, the decryption apparatus 3 receives the IKE packet S4 via the communications interface 11 (step ST1), and determines that the received packet S4 is an IKE packet (step ST2). Then, the decryption apparatus 3 performs the IKE process described in Fig. 4 (ST3).

In the IKE process, the packet decryption unit 15 determines whether or not the data contained in the received IKE packet S4 is encrypted (step ST11). In this case, since the IKE packet S4 is not encrypted, the IKE packet S4 is outputted from the packet decryption unit 15 to the packet reading unit 16 without being decrypted, and the process moves on to step ST13.

In step ST13, the packet reading unit 16 extracts the public key g^{Y} of the responder from the key exchange payload of the IKE packet S4 and stores it in the public key storage unit 19. At the same time, the packet reading unit 16 extracts the random number Nr_b from the random number payload of the IKE packet S4 and stores it in the session information storage unit 18.

Subsequently, the packet reading unit 16 determines whether or not the IKE packet S4 has a key exchange payload KE located behind an ISAKMP header thereof (step ST14). In this case, since the IKE packet S4 contains the key exchange payload KE, steps ST15 to ST17 are performed.

In step ST15, the secret key generation unit 23 generates the initiator's side secret key y' to store it in the secret key storage unit 25. Then, in step ST16, the public key generation unit 22 generates the initiator's side public key g^{y}' by using the initiator's side secret key y' stored in the secret key storage unit 25, and stores thus generated public key g^{y'} in the public key storage unit 19. Afterwards, in step ST17, the packet generation unit 17 creates an IKE packet S4' by replacing the public key g^{y} of the responder contained in the IKE packet S4 stored in the packet reading unit 16 with the initiator's side public key g^{y'} stored in the public key storage unit 19.

Thereafter, the packet reading unit 16 determines whether or not the IKE packet S4 has a random number payload Nr (step ST18). In this case, since the IKE packet S4 has the random number payload Nr, the process proceeds to step ST19.

In step ST19, the session key generation unit 21 generates an IKE session key in accordance with RFC2409. At this time, the common secret key generation unit 24 in the decryption apparatus 3 calculates a common secret key g^{xy'} of the initiator by using the public key g^{x} of the initiator stored in the public key storage unit 19, the initiator's side secret key y' stored in the secret key storage unit 25 and the Oakley group p related to the attribute value of the group description of the key sharing data storage unit 20.

Likewise, the common secret key generation unit 24 calculates a common secret key g^{x'y} of the responder by using the public key g^{y} of the responder stored in the public key storage unit 19, the responder's side secret key x' stored in the secret key storage unit 25 and the Oakley group p related to the attribute value of the group description of the key sharing data storage unit 20.

Next, the session key generation unit 21 generates a SKEYID by using the pre-shared key stored in the pre-shared key storage unit 14, the random numbers Ni_b and Nr_b stored in the session information storage unit 18 in accordance with a hash algorithm of valid IKESA.

Then, the session key generation unit 21 generates an SKEYID_d, an SKEYID_a and an SKEYID_e serving as IKE session keys of the initiator by using the SKEYID, the common secret key g^{xy'} of the initiator, and the initiator cookie and the responder cookie stored in the session information storage unit 18 by employing the hash algorithm of the valid IKESA. Thus generated session keys are stored in the session key storage unit 26.

Likewise, the session key generation unit 21 generates an SKEYID_d, an SKEYID_a and an SKEYID_e serving as IKE session keys of the responder by using the SKEYID, the common secret key g^{x'y} of the responder, and the initiator cookie and the responder cookie stored in the session information storage unit 18 in accordance by using the hash algorithm of the valid IKESA. Thus generated IKE session keys of the responder have same values as those of session keys generated by the responder when the IKE packet S4 is transmitted.

As described, the decryption apparatus 3 generates the IKE session keys of each of the initiator and the responder by using the respective common secret keys, i.e., the common secret key g^{xy'} of the initiator and the common secret key g^{x'y} of the responder.

Subsequently, the packet reading unit 16 determines whether or not the IKE packet S4 has a hash payload (step ST20). In this case, since no hash payload is contained in the IKE packet S4, the process proceeds to step ST22, while skipping step ST21.

Then, the packet reading unit 16 determines the IKE packet S4 is decrypted through the process in step ST12, and since it is found that the IKE packet S4 is not decrypted, the process by the packet reading unit 16 is terminated.

The decryption apparatus 3 sends the IKE packet S4' created in step ST17 to the initiator via the communications interface 12 without encrypting it by the packet encryption unit 27 (step ST6).

If the initiator receives the IKE packet S4', it generates an SKEYID by using the pre-shared key, the random number Nr_b contained in the received random number payload and its own random number Ni_b, and calculates the_common secret key g^{xy'} by using the secret key x generated by the initiator and the initiator's side public key g^{y}' contained in the IKE packet S4'. Then, the initiator generates an SKEYID_b, an SKEYID_a and an SKEYID_e serving as IKE session keys by using the SKEYID, the common secret key g^{xy'}, and the initiator cookie and the responder cookie. These IKE session keys generated by the initiator have same values as those of IKE session keys generated by the decryption apparatus 3 when it sends the IKE packet S4'.

Accordingly, after the process for storing the IKE session keys is completed by the initiator and the responder, the IKE session keys of the initiator and the responder are stored in the decryption apparatus 3. Further, specifically, in the subsequent process, the initiator, the responder and the decryption apparatus 3 encrypts IKE packet's data located behind the ISAKMP header by using the SKEYID_e as an encryption key and also by using an encryption algorithm set by the valid IKESA.

Thereafter, the initiator creates an ID payload containing IDii, which is the ID of the initiator, and a hash payload containing a hash value. At this time, the initiator calculates a hash value HASH_I from the SKEYID in accordance with RFC2409, the public key g^{x} and the initiator cookie, the responder cookie, the SA payload, and the ID payload of the initiator pursuant to the hash algorithm set by the valid IKESA, to thereby create the hash payload containing the hash value HASH_I. Afterwards, the initiator sends an IKE packet S5 obtained by encrypting the hash payload and the ID payload by using the IKE session keys.

### (Fifth Process)

Thereafter, the decryption apparatus 3 receives the packet S5 via the communications interface 11 (step ST1), and it is determined that the received packet S5 is an IKE packet (step ST2). Then, the decryption apparatus performs the IKE process described in Fig. 4 (step ST3).

In step ST11 of the IKE process, the packet decryption unit 15 first determines whether or not the data contained in the IKE packet S5 is encrypted. In this case, since the IKE packet S5 is encrypted, the packet decryption unit 15 proceeds to step ST12 to decrypt the IKE packet S5 by using the IKE session keys of the initiator stored in the session key storage unit 26 in accordance with the encryption algorithm of the valid IKESA. Then, the packet decryption unit 15 outputs thus decrypted IKE packet S5 to the packet reading unit 16, and the process proceeds to step ST13.

In step ST13, the packet reading unit 16 extracts the IDii of the initiator from the ID payload of the IKE packet S5 and stores it in the session information storage unit 18.

Afterwards, the packet reading unit 16 determines whether or not the IKE packet S5 has a key exchange payload (step ST14), a random number payload Nr (step ST18) or a hash payload (step ST20) located behind an ISAKMP header thereof. Since the IKE packet S5 has neither of the key exchange payload and the random number payload Nr but has the hash payload, the packet reading unit 16 proceeds to step ST21, by skipping steps ST15 to ST17 and ST19.

In step ST21, the packet generation unit 17 creates an IKE packet S5' by replacing the hash value HASH_I contained in the hash payload of the IKE packet S5 stored in the packet reading unit 16 with a recalculated hash value obtained by using the session information for the responder. At this time, the new hash value is obtained by the packet generation unit 17 by using the SKEYID, the public key g^{y} of the responder and the responder's side public key g^{x'} sent to the responder, which are stored in the public key storage unit 19, the responder cookie and the initiator cookie stored in the session information storage unit 18, the SA payload value of the IKE packet S1, and the IDii of the initiator pursuant to the hash algorithm of the valid IKESA.

In the subsequent step ST22, since the decryption by the packet decryption unit 15 has been conducted in step ST12, the process moves on to step ST23. In step ST23, the packet encryption unit 27 reads the IKE session keys of the responder from the session key storage unit 26 and encrypts the IKE packet S5', which has been created in step ST21, by using the IKE session keys pursuant to the encryption algorithm of the valid IKESA.

Then, the decryption apparatus 3 sends the encrypted IKE packet S5' to the responder via the communications interface 12 (step ST6).

If the IKE packet S5' is received, the responder decrypts the packet S5' by using the IKE session keys and performs the same process as that conducted by the initiator to create the IKE packet S5, to thereby calculate a hash value and compares it with the hash value HASH_I contained in the hash payload of the IKE packet S5'. Since these two values are identical, the responder determines that no forgery or deception is involved in the IKE process between the responder and the initiator.

Next, the responder creates an ID payload containing IDir, which is the ID of the responder, and a hash payload containing a hash value. At this time, the responder generates the hash payload containing a hash value HASH_R by using the SKEYID in accordance with RFC2409, the public key g^{Y} of the responder, the cookie of the initiator, the cookie of the responder, the SA payload and the ID payload of the initiator pursuant to the hash algorithm set by the valid IKESA. Then, the responder sends an IKE packet S6 obtained by encrypting the hash payload and the ID payload by the IKE session keys.

### (Sixth Process)

If the IKE packet S6 is sent from the responder, the decryption apparatus 3 receives the packet S6 via the communications interface 11 (step ST1), and detects that the received packet S6 is an IKE packet (step ST2). Then, the decryption apparatus 3 performs the process described in Fig. 4 (step ST3).

In the IKE process, the packet decryption unit 15 first determines whether or not the data contained in the IKE packet S6 is encrypted (step ST11). In this case, since the IKE packet S6 is encrypted, the packet decryption unit 15 decrypts the IKE packet S6 by using the IKE session keys of the responder stored in the session key storage unit 26 pursuant to the encryption algorithm of the valid IKESA (step ST12). Then, the process moves on to step ST13.

In step ST13, the packet reading unit 16 extracts the IDir of the responder from the ID payload of the IKE packet S6 and stores it in the session information storage unit 18.

Afterwards, the packet reading unit 16 determines whether or not the IKE packet S6 has a key exchange payload (step ST14), a random number payload Nr (step ST18) or a hash payload (step ST20) located behind an ISAKMP header thereof. Since the IKE packet S6 has neither of the key exchange payload and the random number payload Nr but has the hash payload, the packet reading unit 16 proceeds to step ST21, while skipping steps ST15 to ST17 and ST19.

In step ST21, the packet generation unit 17 creates an IKE packet S6' by replacing the hash value HASH_R contained in the hash payload of the IKE packet S6 stored in the packet reading unit 16 with a recalculated hash value by using the session information for the initiator. At this time, the new hash value is obtained by the packet generation unit 17 by using the SKEYID, the initiator's side public key g^{y'} stored in the public key storage unit 19, the public key g^{x} of the initiator, the responder cookie and the initiator cookie stored in the session information storage unit 18, the SA payload value of the IKE packet S1 and the IDir of the responder stored through the step ST13 pursuant to the hash algorithm of the valid IKESA.

In the subsequent step ST22, since the decryption by the packet decryption unit 15 has been conducted in step ST12, the process moves on to step ST23. In step ST23, the packet encryption unit 27 reads the IKE session keys of the initiator from the session key storage unit 26 and encrypts the IKE packet S6', which has been created in step ST21, by using the IKE session keys pursuant to the encryption algorithm of the valid IKESA.

Then, the decryption apparatus 3 sends thus encrypted IKE packet S6' to the initiator via the communications interface 12 (step ST6).

If the IKE packet S6' is received, the initiator decrypts the packet S6' by using the IKE session keys and performs a same process as that conducted by the responder to cerate the IKE packet S6, to thereby calculate a hash value, and compares it with the hash value HASH_R contained in the hash payload.of the IKE packet S6'. Since these two values are identical, the initiator determines that no forgery or deception is involved in the IKE process between the responder and the initiator.

Thus, the authentication of communications partners is completed between the initiator and the responder, and the phase 1 is terminated.

Phase 1 is followed by phase 2 for negotiating SA of an ESP process and performing an exchange of ESP session keys for use in executing the ESP process. Further, phase 2 will be described for the case of performing a so-called quick mode in accordance with SA of the IKE process established in phase 1.

In phase 2 implemented by the quick mode, the initiator sends the IKE packet S7 containing a hash payload, an SA payload and a random number payload Ni.

The hash payload contains a hash value HASH(1) calculated by using the SKEYID_a obtained in phase 1, a message ID of an ISAKMP header, the SA payload and the random number payload Ni in accordance with the hash algorithm of the valid IKESA used in phase 1. Moreover, the SA payload includes an index value (security parameter index: SPI) for use in selecting the ESP session keys when an ESP packet is received as will be described later and at least one of the following: an encryption algorithm for use in encrypting an ESP payload, a hash algorithm for use in generating authentication data and a set of negotiation data in IPsec such as a term of validity of the ESP session keys. Further, the random number payload Ni includes a newly generated random number Ni_b of the initiator. Also, the initiator creates an IKE packet S7 by encrypting a data part located behind the ISAKMP header by using the IKE session key SKEYID_e in accordance with the encryption algorithm of the valid IKESA.

### (Seventh Process)

If the IKE packet S7 is received via the communications interface 11, the decryption apparatus 3 sends the received packet S7 to the packet decryption unit 15 to determine whether the IKE packet S7 is encrypted or not (step ST11). In this case, since the IKE packet S7 is encrypted, it is decrypted by the packet decryption unit 15 (step ST12).

At this time, the packet decryption unit 15 decrypts the IKE packet S7 by using the IKE session key SKEYID_e of the initiator stored in the session key storage unit 26 in accordance with the encryption algorithm of the valid IKESA. Then, the packet decryption unit 15 outputs the decrypted IKE packet S7 to the packet reading unit 16.

In step ST13, the packet reading unit 16 extracts the SA payload and the random number payload containing the random number Ni_b from the Ike packet S7, and stores them in the session information storage unit 18.

Thereafter, the packet reading unit 16 determines whether or not the IKE packet S7 includes a key exchange payload (step ST14), a random number payload (step ST18) or a hash payload (step ST20) located behind an ISAKMP header thereof. In this case, since the IKE packet S7 contains neither of the key exchange payload and the random number payload Nr but has the hash payload, steps ST15 to ST17 and ST19 are skipped and step ST21 is executed.

In step ST21, the packet generation unit 17 generates an IKE packet S7' by replacing the hash value HASH(1) of the hash payload of the IKE packet S7 stored in the packet reading unit 16 with a new hash value recalculated by using information for the responder to output it to the packet encryption unit 27. Herein, the packet generation unit 17 obtains the new hash value HASH(1) by performing a recalculation by using the IKE session key SKEYID_a of the responder stored in the session key storage unit 26, the message ID of the ISAKMP header, the random number Ni_b and the SA payload of the IKE packet S7 stored in the step ST13 in accordance with the hash algorithm of the valid IKESA.

In step ST22, since the IKE packet S7 is decrypted in step ST12, the process moves on to step ST23. In step ST23, the IKE packet S7's is encrypted by using the IKE session key of the responder stored in the session key storage unit 26 to be outputted to the communications interface 12.

Then, the decryption apparatus 3 sends the encrypted IKE packet S7' to the responder through the communications interface 12 (step ST6).

If the IKE packet S7' is received, the responder calculates a hash value by performing the same process as conducted by the initiator to create the IKE packet S7, and then compares thus calculated hash value with the hash value HASH(1) contained in the hash payload of the IKE packet S7'. Since these two values are identical, the responder determines that no forgery or deception is involved in the IKE process.

Thereafter, the responder selects an IPsecSA from the set of IPsecSAs contained in the SA payload of the IKE packet S7' and cerates an SA payload containing the selected IPsecSA (valid IPsecSA) and an SPI value. At the same time, the responder also generates a random number payload containing a newly generated random number Nr_b. Afterwards, the responder calculates a hash value HASH(2) by using the IKE session key SKEYID_a, the message ID contained in an ISAKMP header of the IKE packet S7', the random number Ni_b contained in the random number payload, the newly generated SA payload and random number payload. Then, the responder creates a hash payload containing the hash value HASH(2).

Subsequently, the responder encrypts a data part located behind the ISAKMP header by using the IKE session keys through the use of the encryption algorithm of the valid IKESA. Then, the responder sends an IKE packet S8 containing the hash payload, the SA payload and the random number payload Nr.

Further, the responder also generates an ESP session key KEYMAT by using the SKEYID_d, a protocol field of the valid IPsecSA contained in the IKE packet S7', SPI field values of the initiator and the responder, and the random numbers Ni_b and Nr_b by using the hash algorithm of the valid IKESA.

### (Eighth Process)

If the IKE packet S8 is received via the communications interface 11, the decryption apparatus S3 sends the received packet S8 to the packet decryption unit 15 to determine whether or not the packet S8 is encrypted (step ST11). In this case, since the IKE packet S8 is encrypted, it is decrypted by the packet decryption unit 15 (step ST12) .

At this time, the packet decryption unit 15 executes the decryption of the IKE packet S8 by using the IKE session key SKEYID_e of the responder stored in the session key storage unit 26 in accordance with the encryption algorithm of the valid IKESA, and then outputs the decrypted IKE packet S8 to the packet reading unit 16.

In the following step ST13, the packet reading unit 16 extracts the valid IPsecSA contained in the SA payload of the IKE packet S8 and the random number Nr_b contained in the random number payload thereof, and stores them in the session information storage unit 18.

Thereafter, the packet reading unit 16 determines whether or not the IKE packet S8 has a key exchange payload (step ST14), a random number payload (ST18) or a hash payload (step ST20) located after an ISAKMP header thereof. In this case, since the IKE packet S8 has no key exchange payload but has the random number payload Nr and the hash payload, steps ST19 and ST21 are performed, while skipping steps ST15 to ST17.

In step ST19, the session key generation unit 21 generates an ESP session key in accordance with RFC2409. Herein, the session key generation unit 21 generates an ESP session key KEYMAT of the initiator in accordance with the hash algorithm of the valid IKESA by using the IKE session key SKEYID_d of the initiator stored in the session key storage unit 26, and the protocol field of the valid IPsecSA, the SPI field value and the random numbers Ni_b and Nr_b stored in the session information storage unit 18. Thus generated ESP session key KEYMAT is stored in the session key storage unit 26.

Likewise, the session key generation unit 21 also generates an ESP session key KEYMAT of the responder in accordance with the hash algorithm of the valid IKESA by using the IKE session key SKEYID_d of the responder stored in the session key storage unit 26 and the protocol field of the valid IPsecSA, the SPI field value and the random numbers Ni_ b and Nr_b stored in the session information storage unit 18. Thus generated ESP session key KEYMAT of the responder is stored in the session key storage unit 26.

In the subsequent step ST21, the packet generation unit 17 generates an IKE packet S8' by replacing the hash value HASH(2) contained in the hash payload of the IKE packet S8 stored in the packet reading unit 16 with a new hash value recalculated based on the information for the initiator. Then, the packet generation unit 17 outputs thus generated IKE packet S8' to the packet encryption unit 27. At this time, the packet generation unit 17 recalculates the hash value in accordance with the hash algorithm of the valid IKESA by using the IKE session key SKEYID_a of the initiator stored in the session key storage unit 26, the message ID of the ISAKMP header, and the random number Ni_b of the initiator, the SA payload and the random number Nr_b of the responder stored in the session information storage unit 18.

In step ST22, since the IKE packet S8 is decrypted through the step ST12, the process moves on to step ST23. In step ST23, the IKE packet S8' is encrypted by using the IKE session key of the initiator stored in the session key storage unit 26, and then is outputted to the communications interface 12.

Then, the decryption apparatus 3 sends the encrypted IKE packet S8' to the initiator from the communications interface 12 (step ST6).

If the IKE packet S8' is received, the initiator calculates a hash value by performing the same process as that conducted by the responder to generate the IKE packet S8, to thereby compare thus calculated hash value with the hash value HASH(2) contained in the hash payload of the IKE packet S8'. Since these two values are identical, the initiator determines that no forgery or deception is involved in the IKE process between the initiator and the responder.

Afterwards, the initiator calculates a hash value HASH(3) by using the SKEYID_a, the message ID of the ISAKMP header of the received IKE packet S8', its own random number Ni_b and the random number Nr_b contained in the random number payload of the received IKE packet S8' in accordance with the hash algorithm of the valid IKESA. Then, the initiator creates a hash payload containing the hash value HASH(3) and also generates an IKE packet S9 containing thus generated hash payload. Then, the initiator encrypts a data part included in the hash payload with the IKE session keys to send the IKE packet S9.

Moreover, the initiator generates an ESP session key KEYMAT by using the SKEYID_d, and the protocol field of the valid IPsecSA, the SPI field values of the initiator and the responder and the random numbers Ni_b and Nr_b contained in the IKE packet S8' in accordance with the hash algorithm of the valid IKESA.

### (Ninth Process)

If the IKE packet S9 is received via the communications interface 11, the decryption apparatus 3 sends the received IKE packet S9 to the packet decryption unit 15 to determine whether or not the IKE packet S9 is encrypted (step ST11). In this case, since the IKE packet S9 is encrypted, the packet decryption unit 15 decrypts the IKE packet S9 by using the IKE session key of the initiator stored in the session key storage unit 26 in accordance with the encryption algorithm of the valid IKESA (step ST12). Then, in the subsequent step ST13, it is determined by the packet reading unit 16 that the IKE packet S9 does not contain any data to be stored in the session information storage unit 18, so the process proceeds to step ST14.

The packet reading unit 16 determines whether or not the IKE packet S9 has a key exchange payload (step ST14), a random number payload Nr (step ST18) or a hash payload (step ST20) located after an ISAKMP header thereof. In this case, since the IKE packet S9 contains neither of the random number payload Nr and the key exchange payload sent from the responder but contains a hash payload, step ST21 is executed, while skipping steps ST15 to ST17 and ST19.

In step ST21, the packet generation unit 17 generates an IKE packet S9' by replacing the hash value contained in the hash payload of the IKE packet S9 with a new hash value recalculated based on the session information of the responder. Then, the packet generation unit 17 outputs thus generated IKE packet S9' to the packet encryption unit 27. At this time, the packet generation unit 17 obtains the new hash value HASH(3) by performing a recalculation in accordance with the hash algorithm of the valid IKESA by using the IKE session key SKEYID_a of the responder stored in the session key storage unit 26, the message ID of the ISAKMP header, and the random numbers Ni_b and Nr_b stored in the session information storage unit 18.

In step ST22, since the decryption has been performed in the step ST12, the process moves on to step ST 23. In step ST23, the packet encryption unit 27 encrypts the IKE packet S9' by using the IKE session key of the responder stored in the session key storage unit 26, and then the encrypted IKE packet S9' is sent to the responder.

If the IKE packet S9' is received, the responder calculates a hash value by performing the same process as that conducted by the initiator to create the IKE packet S9, and compares thus calculated hash value with the hash value HASH(3) contained in the hash payload of the IKE packet S9'. Since these two values are identical, the responder determines that no forgery or deception is involved in the IKE process between the responder and the initiator.

Thus, the exchange of the ESP session keys between the initiator and the responder is completed, and at the same time the ESP session keys of the initiator and the responder are stored in the decryption apparatus. Thus, phase 2 is terminated.

Moreover, since the ESP session keys contain information on the term of validity of the session keys set by the IPsecSA, it is possible to generate new ESP session keys through the execution of phase 2 before the term of validity expires. Also, the IKE session keys contains information on the term of validity of the session keys set by the IKESA, so it is possible to generate new IKE session keys through performing phase 1 before the term of validity expires.

### (ESP Process)

After the completion of the IKE process described above, the communications system is capable of performing an ESP process for encrypted communications between the VPN terminals 1 and 2 by encrypting data through the use of the ESP session keys. The ESP process includes a tenth to an eleventh process marked by ⑩ and ⑪ in Fig. 6.

Specifically, when the VPN terminal 1 sends data to the VPN terminal 2, the VPN terminal 1 encapsulates the data in accordance with a certain protocol, e.g., a TCP (Transmission Control Protocol).

Thereafter, the VPN terminal 1 adds an ESP trailer to a tail of an IP packet by a sequence set by RFC2406 to make the IP packet to be an integer multiple of a block length of the encryption algorithm of the IPsecSA selected in phase 2, and encrypts the IP packet by using the ESP session keys in accordance with the encryption algorithm. Then, an ESP header is added to a head of the encrypted data and an IP header is added to a head of the ESP header to generate an ESP packet S10. In the IP header, a destination is set to be an IP address of the VPN terminal 2 and a source is set to be an IP address of the VPN terminal 1. Thus generated ESP packet S10 is transmitted to the VPN terminal 2. Further, the SPI field value of the SA payload that is sent by the VPN terminal 2 in phase 2 is duplicated and stored into an SPI field of the ESP header.

Afterwards, if the ESP packet S10 is received via the VPN terminal 1 (step ST1), the decryption apparatus 3 determines that the received packet S10 is not an IKE packet (step ST2) but an ESP packet (step ST4) by referring to the IP header of the packet S10. Then, the decryption apparatus 3 starts the ESP process in step ST5.

In the ESP process, as shown in Fig. 5, the packet decryption unit 15 of the decryption apparatus 3 first decrypts the encrypted part of the ESP packet S10 by using the ESP session key of the initiator stored in the session key storage unit 26 in accordance with the encryption algorithm set by the IPsecSA (step ST31). Then, the packet decryption unit 15 outputs the decrypted ESP packet S10 to the packet encryption unit 27 and packet standardization unit 28.

Then, in the following step ST32, the packet standardization unit 28 extracts the ESP trailer from the decrypted ESP packet S10 provided from the packet decryption unit 15, and standardizes the packet S10 into a data format that can be processed by the network monitoring apparatus 4. Then, the packet standardization unit 28 sends the packet S10 in a plain text form to the network monitoring apparatus 4 via the communications interface 13.

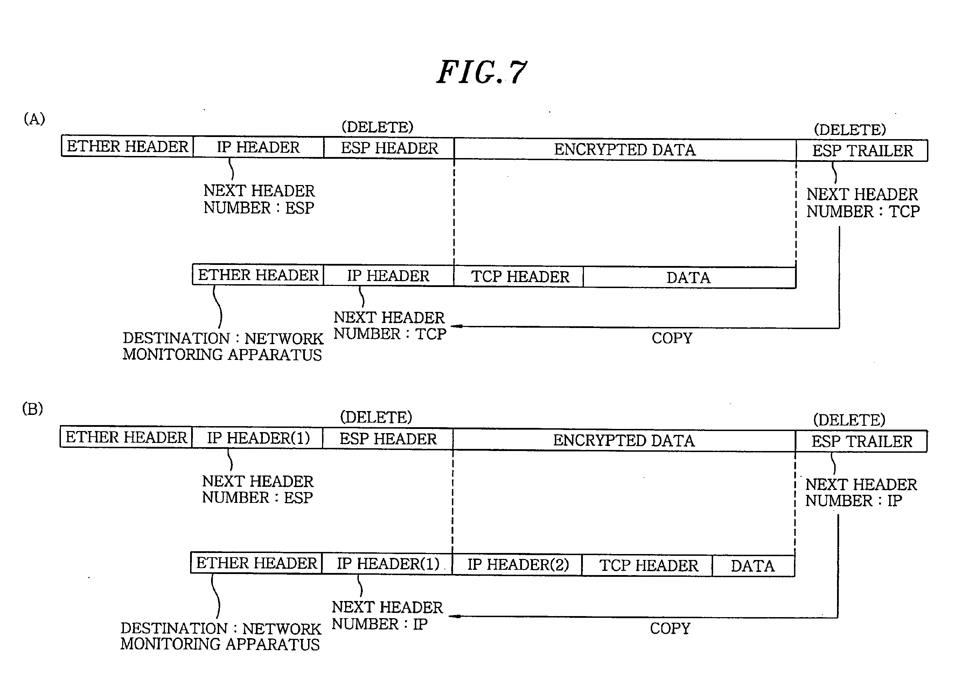

Specifically, as described in Fig. 7A, when the received ESP packet S10 is of a transport mode of the ESP Protocol, the packet standardization unit 28 duplicates the value of the protocol field (next header number) contained in the ESP trailer of the ESP packet S10 to write the duplicated value into the protocol field of the IP header of a lower layer of the ESP, and at the same time deletes the ESP header and the ESP trailer. The length of the ESP trailer is obtained by adding 2 bytes to a pad length field of the ESP trailer. Further, the packet standardization unit 28 adjusts a header of the lower layer, e.g., the IP header, to reflect the change in the length of the data due to the deletion of the ESP header and the ESP trailer. To be more specific, a length field and a checksum field of the IP header are recalculated. When the communications interface 13 and the network monitoring apparatus 4 are connected via LAN, the decryption apparatus 3 adds an Ether header to the head of the IP header, wherein the Ether header has a MAC address of the network monitoring apparatus 4 set as the destination. Accordingly, the network monitoring apparatus 4 can receive the packet and monitor the packet by referring to the decrypted data of the packet in the plain text, while investigating the legitimacy thereof.

Moreover, the network monitoring apparatus 4 monitors all of the packets that have arrived at the communications interface, even if the destinations of those packets are not the address of the network monitoring apparatus 4. However, by setting the MAC address of the network monitoring apparatus 4 as the destination by the packet standardization unit 28, it can be prevented that a switching hub does not send the packet to the port to which the network monitoring apparatus 4 is connected, even when, for example, a switching hub is interposed between the decryption apparatus 3 and the network monitoring apparatus 4.

Further, as described in Fig. 7B, when the received ESP packet S10 is of a tunnel mode of the ESP Protocol, the packet standardization unit 28 duplicates a next header number IP:4 of the ESP trailer and changes a next header number of an IP header 1 that is added to a head of an IP header 2 that resides in the head of the decrypted data.

In the subsequent step ST33, the packet encryption unit 27 encrypts the decrypted part of the ESP packet S10 by using the ESP session key of the responder in accordance with the algorithm set by the IPSecSA, to thereby generate an ESP packet S10'. Thus generated ESP packet S10' is sent through the communications interface 12.

Thereafter, if the VPN terminal 2 receives the ESP packet S10' , it decrypts a data part located after the ESP header in accordance with the encryption algorithm set by the IPsecSA by using the ESP session key selected based on the SPI field value of the ESP header. Then, the VPN terminal 2 restores the IP packet encapsulated by the VPN terminal 1 by way of removing the ESP trailer from the decrypted data.

When the VPN terminal 2 sends data to the VPN terminal 1, the same process as described above is conducted. In this case, an ESP packet S11 is decrypted in step ST31 by using the ESP session key of the responder and an ESP packet S11' is obtained by encrypting the decrypted data portion of the ESP packet S11 by using the ESP session key of the initiator (in step ST33). Then, thus generated ESP packet S11' is transmitted from the communications interface 12.

In the above-described step ST33, the decryption apparatus 3 may further include an additional communications interface serving as an input unit through which a communications content outputted from an arbitrary monitoring apparatus is inputted, whereby the communications content is standardized based on process information inputted from said arbitrary apparatus to be encrypted and transmitted. Specifically, when changing an IP packet in the plain text into an ESP packet, the packet standardization unit 28 renders the content of the ESP packet received via the VPN terminal 1 or 2 different from that of the ESP packet to be transmitted. For example, when information on a filtering condition for a packet is inputted from said arbitrary apparatus, the packet standardization unit 28 may determine whether or not to relay the ESP packet depending on the filtering condition.

### (Effect of the First Embodiment)

As described above, in the communications system in accordance with the present invention, an encryption algorithm and ESP session keys of the VPN terminals 1 and 2 are stored as information for use in decrypting encrypted communications data. Thus, by standardizing a decrypted packet in a plain text form into a data format capable of being processed by the network monitoring apparatus 4, it is possible to monitor the packet by means of the network monitoring apparatus 4.

Accordingly, by using the decryption apparatus 3, it is possible to monitor communications contents even if the contents are encrypted by using the existing network monitoring apparatus 4 that can analyze data only in plain text. Moreover, in accordance with this communications system, even though the encrypted communications data is transparently decrypted while it is on the path of the encrypted communications to be monitored by the network monitoring apparatus 4, the data can be re-encrypted before transmitted to the VPN terminal 1 or 2. Thus, the security level of the encrypted communications system can be prevented from being deteriorated.

Furthermore, in accordance with the communications system of the present invention, connecting an arbitrary apparatus to the decryption apparatus 3 to input information on an additional process to the decryption apparatus 3 from said arbitrary apparatus, the additional process can be performed before re-encrypting the information on the additional process and relaying it to the VPN terminal 1 or 2.

### (Second Preferred Embodiment)

Hereinafter, a communications system in accordance with a second preferred embodiment of the present invention will be described. Further, parts and steps same as those described in the first embodiment will be assigned same reference numerals and step numbers, and detailed description thereof will be omitted.

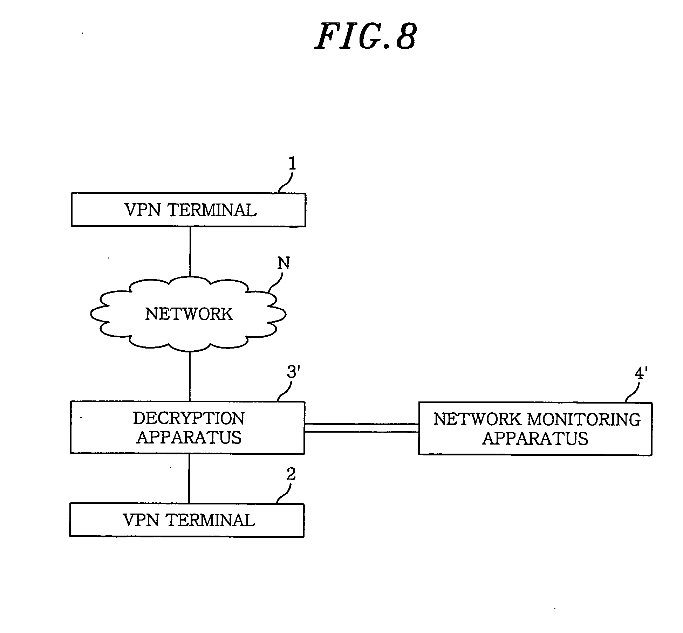

As shown in Fig. 8, the communications system in accordance with the second embodiment is configured such that a decryption apparatus 3' and a network monitoring apparatus 4' perform two-way communications. In this communications system, packets in plain text forms are outputted from the decryption apparatus 3' to the network monitoring apparatus 4' to be monitored by the network monitoring apparatus 4'. As a result, only such packets that are determined to be legitimate by the network monitoring apparatus 4' are returned to the decryption apparatus 3' to be encrypted and relayed to their destinations. That is, the communications system in accordance with the second embodiment has an additional function of eliminating illegitimate packets.

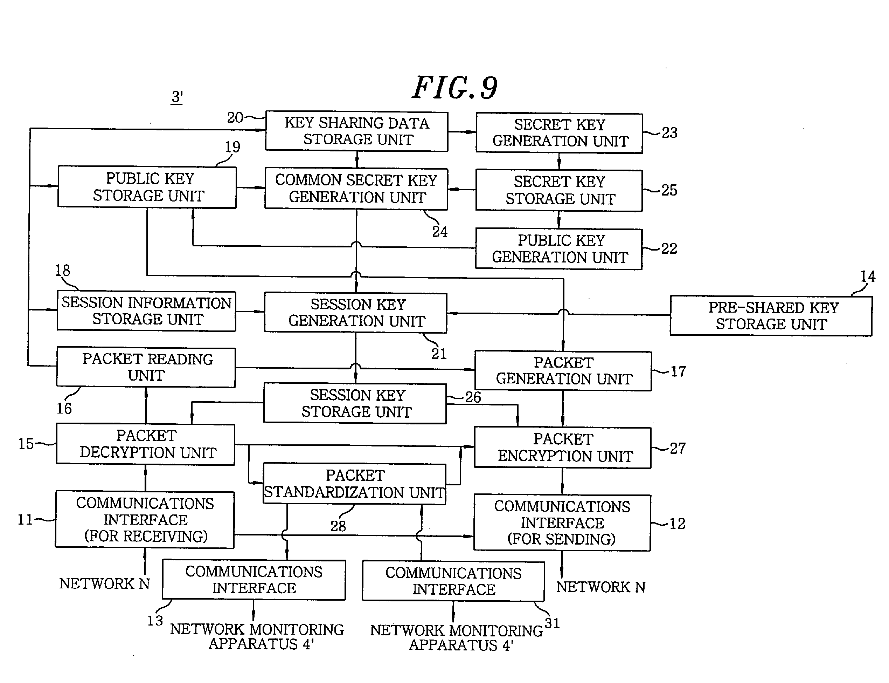

As shown in Fig. 9. the decryption apparatus 3' in accordance with the second embodiment includes a communications interface 31 for receiving packets returned from the network monitoring apparatus 4'. Then, a packet standardization unit 28 restores the packet received by the communications interface 31 into its original form before being standardized, and a packet encryption unit 27 encrypts the packet and then outputs it through a communications interface 12. Thus, the decryption apparatus 3' relays the ESP packet to its destination only when the monitoring result thereof indicates that it is legitimate. If the monitoring result thereof indicates that it is illegitimate, the network monitoring apparatus 4 does not return the packet to the decryption apparatus 3' so that the ESP packet is not relayed.

Further, the network monitoring apparatus 4' serves as a gateway type communications apparatus using following two communications interfaces: one for sending and receiving packets in plain text forms related to a network N and the other for sending and receiving packets in plain text forms related to a VPN terminal 2. Similarly to the first embodiment described above, if the network monitoring apparatus 4' receives an IP packet in a plain text form generated by the decryption apparatus 3' by decrypting an ESP packet, the network monitoring apparatus 4' analyzes content of the received IP packet. If the content of the IP packet is determined to be illegitimate, the IP packet is abandoned, so that an illegitimate ESP packet is prohibited from being relayed. On the other hand, if the content of the IP packet is determined to be legitimate, the network monitoring apparatus 4' sends the IP packet to the decryption apparatus 3' via a communications interface through which the IP packet is not received, thereby allowing the IP packet to be relayed to its destination as an ESP packet.

Herein, as in the case of the communications interfaces 11 and 12 in the first embodiment, the two interfaces 13 and 31 are fixedly connected to the two communications interfaces of the network monitoring apparatus 4'.

If a packet is received from the VPN terminal 2, a communications interface connected to the VPN terminal 2 serves as the communications interface 11 for receiving data whereas the communications interface connected to the network N serves as the communications interface 12 for sending data, and a communications interface of the network monitoring apparatus 4' connected to the VPN terminal 2 serves as a communications interface connected to the communications interface 13 whereas communications interface of the network monitoring apparatus 4' connected to the network N serves as a communications interface connected to the communications interface 31. Conversely, if a packet is received from the network N, a communications interface connected to the network N serves as the communications interface 11 for receiving data whereas the communications interface connected to the VPN terminal 2 serves as the communications interface 12 for sending data, and a communications interface of the network monitoring apparatus 4' connected to the network N serves as a communications interface connected to the communications interface 13 whereas communications interface of the network monitoring apparatus 4' connected to the VPN terminal 2 serves as a communications interface connected to the communications interface 31.

If the communications interface 31 receives the IP packet from the network monitoring apparatus 4', it outputs the IP packet to the packet standardization unit 28. The packet standardization unit 28 adds an ESP header and an ESP trailer to the packet and then outputs it to the packet encryption unit 27. The packet encryption unit 27 encrypts the received packet, and thus encrypted packet is transmitted through the communications interface 12.

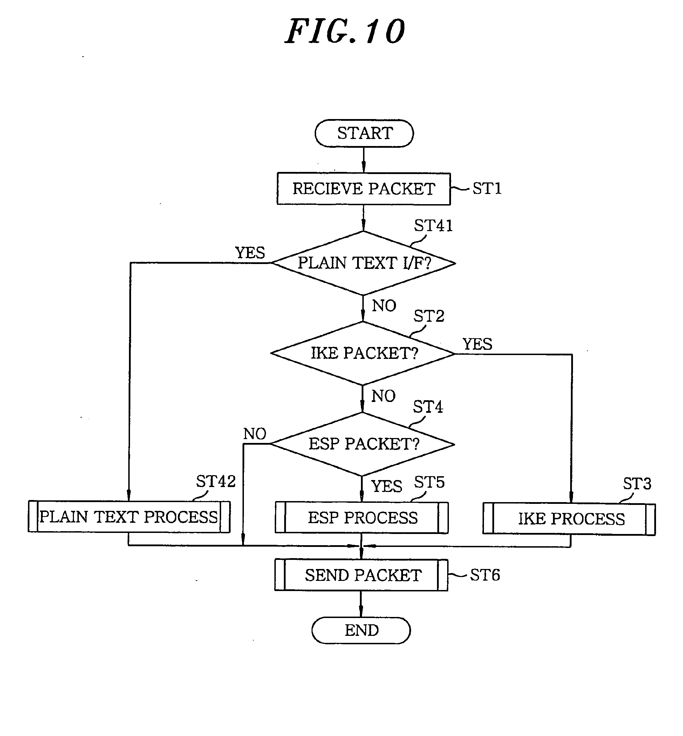

An overall operation of the decryption apparatus 3' with the above-described configuration will now be explained with reference to Fig. 10. If the decryption apparatus receives a packet (step ST1), it determines whether the communications interface that has received the packet is a communications interface for receiving a packet in a plain text form, i.e., whether the communications interface having received the packet is the communications interface 13 or the communications interface 31 (step ST41). If the communications interface is found to be the one for sending or receiving a packet in a plain text form, the process moves on to step ST42; and if otherwise, steps ST2 and later is executed.

Further, if an ESP packet is received from the VPN terminal 1 or the VPN terminal 2 (step ST1), the decryption apparatus 3' in accordance with the second embodiment determines that the ESP packet is not in a plain text form because the ESP packet is received through the communications interface 11 (step ST41) and also detects that the received packet is not an IKE packet (step ST2) but an ESP packet (step ST4). Then, the decryption apparatus 3' starts an ESP process.

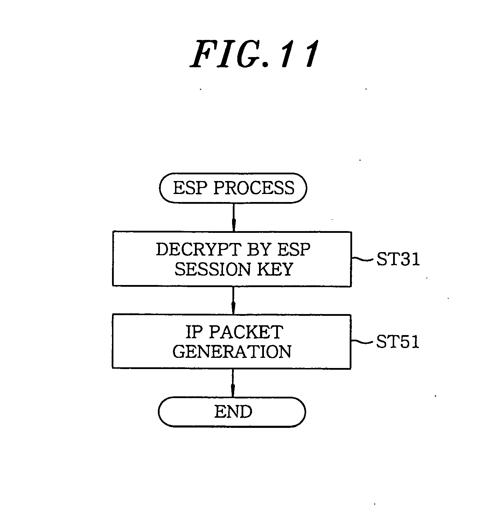

Referring to Fig. 11, in the ESP process, a packet decryption unit 15 decrypts an encrypted part of the received ESP packet in accordance with an encryption algorithm set by IPsecSA by using ESP session keys for an initiator or ESP session keys for a responder stored in a session key storage unit 26. Then, the packet decryption unit 15 outputs thus decrypted ESP packet to the packet standardization unit 28.

The packet standardization unit 28 standardizes the received ESP packet (step ST51) into an IP packet receivable and analyzable by the network monitoring apparatus 4'. At this time, the packet standardization unit 28 extracts the ESP trailer from the decrypted ESP packet provided from the packet decryption unit 15 and standardizes the packet into a data format capable of being processed by the network monitoring apparatus 4', as described in Figs. 7A or 7B. Then, the packet standardization unit 28 sends the standardized packet to the network monitoring apparatus 4' (step ST6) and terminates the operation.

Here, the standardization of the packet performed by the packet standardization unit 28 in step ST51 involves the steps of, for example, copying a value of a protocol field contained in the ESP trailer in the ESP packet to write the copied value into a protocol field of an IP header of a lower layer of the ESP; and deleting the ESP header and the ESP trailer. The length of the ESP trailer is obtained by adding 2 bytes to a pad length field of the ESP trailer. Further, the packet standardization unit 28 adjusts a header of the lower layer, e.g., the IP header, to reflect the change in the length of the data due to the deletion of the ESP header and the ESP trailer. Specifically, a length field and a checksum field of the IP header are recalculated.

Further, when the communications interface 13 and the network monitoring apparatus 4' are connected via LAN, the decryption apparatus 3' adds an Ether header to the head of the IP header, wherein the Ether header has a MAC address of the network monitoring apparatus 4 set as the destination. Accordingly, the network monitoring apparatus 4' can assuredly receive the packet and monitor the packet by referring to the decrypted data of the packet in the plain text, investigating the legitimacy thereof.

Thus, if an IP packet received from the decryption apparatus 3' is determined to be illegitimate by the network monitoring apparatus 4' analyzing the content thereof, the IP packet is abandoned. However, if the received IP packet is determined to be legitimate, the network monitoring apparatus 4' returns the IP packet to the decryption apparatus 3' through a communications interface that has not received the IP packet.

If the decryption apparatus 3' receives the IP packet from the network monitoring apparatus 4' through the communications interface 31 (step ST1), it proceeds from step ST41 to step ST42 since the received IP packet is a packet in a plain text form.

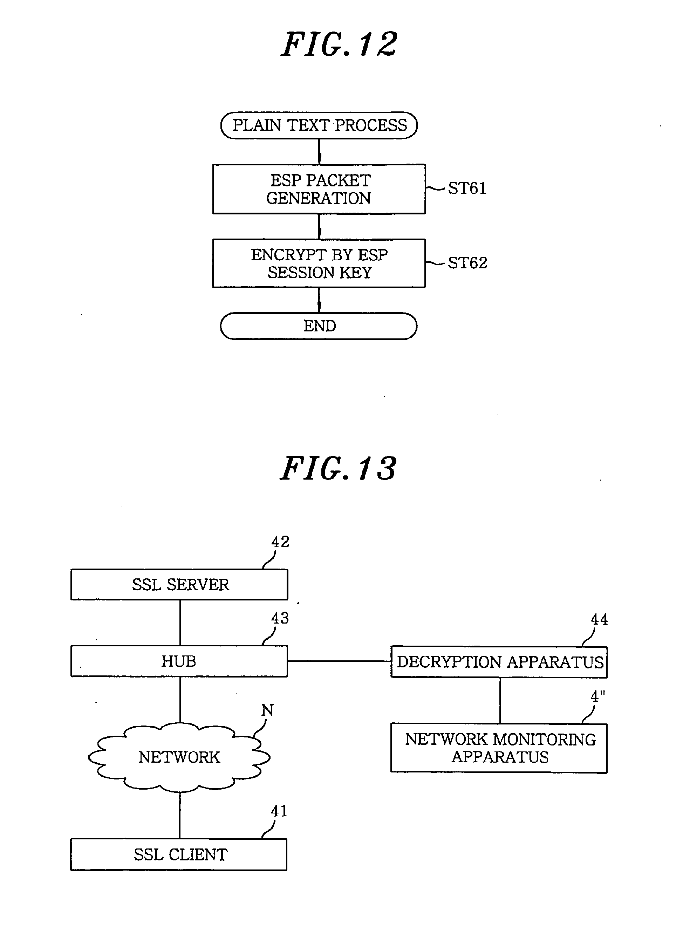

The process of the packet in the plain text form is as follows. As shown in Fig. 12, the IP packet received by the communications interface 31 is standardized into an ESP packet by the packet standardization unit 28. Then, thus standardized ESP packet is outputted to the packet encryption unit 27. At this time, the packet standardization unit 28 performs an operation opposite to that performed in step ST51. That is, by referring to the length field of the IP header and a header length field, the packet standardization unit 28 calculates the length of a data part by subtracting the length of the IP header from the header length and then adding 2 bytes to the result of the subtraction. Thereafter, the packet standardization unit 28 calculates n bytes, which is integer multiple of the block length of the encryption algorithm set by IPsecSA, to obtain a padding to be added to the data. Then, an ESP header is added to the IP header of the IP packet and an ESP trailer containing n-byte padding is added to a tail of the IP packet. Herein, the n-byte padding is copied into the pad length field of the ESP trailer, whereas the protocol field of the IP header is copied into the header field located after the ESP trailer. Further, a value of "50" representing ESP is copied into the protocol field of the IP header. Furthermore, the header of the lower layer, e.g., the IP header, is adjusted to reflect the change in the length of the data due to the addition of the ESP header and the ESP trailer. To be more specific, the length field and the checksum field of the IP header are recalculated.

In the following step ST62, the packet encryption unit 27 encrypts the decrypted ESP packet in accordance with the encryption algorithm set by IPSecSA by using an ESP session key, and thus encrypted ESP packet is transmitted through the communications interface 12.

The VPN terminal 1 or 2 that has received the ESP packet decrypts a data part located after the ESP header in accordance with the encryption algorithm set by IPsecSA by using an ESP session key selected based on an SPI field value of the ESP header. Then, the VPN terminal 1 or 2 restores encapsulated IP packet by removing the ESP trailer from the decrypted data, thereby making it possible to process the IP packet.

### (Effect of the Second Embodiment)

As described above, in the communications system in accordance with the second embodiment of the present invention, a packet in a plain text form is sent from the decryption apparatus 3' to the network monitoring apparatus 4' to be monitored by the network monitoring apparatus 4'. Thus, a relay of the packet to its destination can be stopped based on the monitoring result of the network monitoring apparatus 4'.

Furthermore, the communications system in accordance with the second embodiment can be implemented by using an existing network monitoring apparatus 4' designed to detect an illegitimate packet and abandon it.

### (Third Embodiment)

In the following, a communications system in accordance with a third embodiment of the present invention will be described. Further, parts same as those described in the above-described embodiments will be assigned same reference numerals and notations, and detailed description thereof will be omitted.

The communications system in accordance with the third embodiment is characterized in that, similarly to the above-described embodiment, when encrypted communications are performed between a server and a client based on SSL (Secure Socket Layer), a decryption apparatus intercepts encrypted packets to have the intercepted packets monitored by a network monitoring apparatus. Unlike the case of the IPsec described above, the encrypted communications based on SSL do not employ the Diffie-Hellman key sharing method, so that the decryption apparatus need not be connected directly on a communications path between the server and the client and is configured as shown in Fig. 13.

In the communications system, a hub 43 is installed on a communications path between an SSL client 41 and an SSL server 42. A decryption apparatus 44 is branched from the hub 43 and a network monitoring apparatus 4" is connected to the decryption apparatus 44.

When encrypted communications are performed between the SSL client 41 and the SSL server 42, the SSL client 41 performs processes based on SSLHP (SSL Handshake Protocol) between the SSL client 41 and the SSL server 42 through the network N and the hub 43, thereby establishing connections of the SSL Protocol. At this time, the SSL client 41 investigates a certificate received from the SSL server 42 to confirm a legitimacy of the SSL server 42. Thus, the SSL client 41 performs an authentication of the communications partner. Thereafter, key blocks (common keys), and an encryption algorithm are determined by negotiations in accordance with the Handshake Protocol, and encrypted communications are performed between the SSL client 41 and the SSL server 42 by using SSL packets whose data parts in the unit of record are encrypted in the key block.

Further, a connection of the SSL Protocol is a connection of TCP between the SSL client 41 and the SSL server 42, i.e., information identified by a pair of a source and a destination. In addition, a session of the SSL Protocol is information identified by a session ID between the SSL client 41 and the SSL server 42.

The connection is related to the session by the session ID sent and received in the Handshake Protocol.

Further, in the SSL Protocol, processes are performed based on SSLRL (SSR Record Layer) which corresponds to a lower layer of the SSL Handshake Protocol, so that data is sent and received in the unit of record. The record is adapted by being separated from or combined with the packets by the TCP/IP layer to be sent and received.

The hub 43 functions as a mediation apparatus for mediating SSL packets sent and received between the SSL client 41 and the SSL server 42, and sends the SSL packets to the decryption apparatus 44 as well. Thus, the hub 43 intercepts the mediating SSL packets by the decryption apparatus 44.

The decryption apparatus 44 decrypts the SSL packets received by the hub 43 by using a secret key of the SSL server 42, standardizes the decrypted packets into a data format that can be processed by the network monitoring apparatus 4", and outputs the standardized packets to the network monitoring apparatus 4". Specifically, the decryption apparatus 44 standardizes the packets based on a TCP/IP packet in which the destination port or the source port of the TCP header is set to be "80", which represents HTTP (HyperText Transfer Protocol), by setting the destination of the Ether header of the packet obtained by decrypting the SSL packet to be the network monitoring apparatus 4" .

The network monitoring apparatus 4" receives the TCP/IP packets sent by the decryption apparatus 44, analyzes the contents of the TCP/IP packets to determine whether or not the contents of the TCP/IP packets are appropriate. For example, when the network monitoring apparatus 4" detects an internet worm in a TCP/IP packet, the network monitoring apparatus 4" determines that the content of the TCP/IP packet is inappropriate and notify this to the network administrator or the like.

### (Configuration of the Decryption Apparatus)

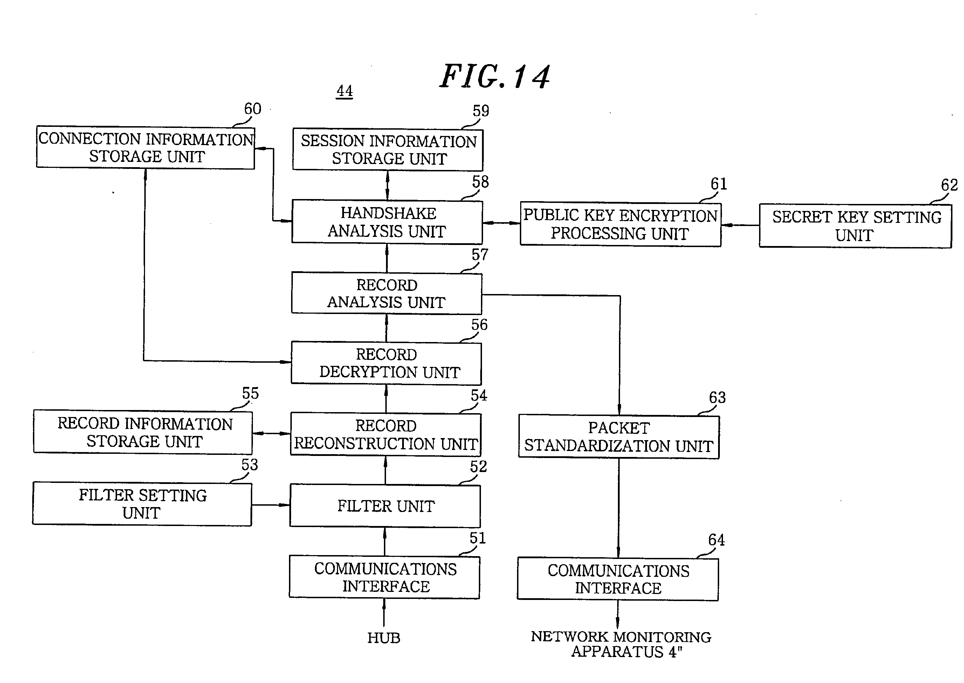

In the communications system described above, the decryption apparatus 44 is configured as shown in Fig. 14.

A communications interface 51 is connected to the hub 43, and receives the SSL packets between the SSL client 41 and the SSL server 42 via the hub 43. Further, the communications interface 51 outputs the SSL packets to the filter unit 52.

The filter unit 52 receives the SSL packets via the communications interface 51, and filtering conditions of the SSL packets are inputted to the filtering unit 52 by the filter setting unit 53. The filter setting unit 53 is a user interface for setting filtering conditions for the decryption apparatus 44 to process the SSL packets. Specifically, the filtering conditions include an IP address of the SSL server 42 and a port number of the SSL in the SSL server 42. The filter unit 52 filters the inputted SSL packets pursuant to the filtering conditions set by the filter setting unit 53 and outputs the packets satisfying the filtering conditions to the record reconstruction unit 54 as the SSL packets. Specifically, an IP address of a packet inputted to the communications interface 51 is compared to the IP address of the SSL server 42 set as one of the filtering conditions, and a port number of the packet inputted to the communications interface 51 is compared to the port number of the SSL server 42 set as one of the filtering conditions. When the IP address or the port number of the packet inputted to the communications interface 51 is determined to be different from the IP address or the port number of the SSL server 42, the filter unit 52, the packet is abandoned. Otherwise, the packet is determined as the SSL packet, and outputted to the record reconstruction unit 54.

The record reconstruction unit 54 reconstructs the data part of the SSL packet into record data in the unit of record and outputs the reconstructed data to a record decryption unit 56. Further, a record information storage unit 55 is a buffer used by the record reconstruction unit 54 when reconstructing the record.

Herein, when data is sent in accordance with the SSL Protocol, the SSL client 41 and the SSL server 42 divides the data in SSL record layers into structures of the record, i.e., the record data, for a TCP/IP layer process thereof to be performed. Further, in the TCP/IP layer process, the received record is divided in the unit of packet based on a MTU value representing a maximum size of an IP datagram, so that the data length of the received record is adjusted for the received record to be sent.

When an encryption state kept in a connection information storage unit 60 is valid, the record decryption unit 56 decrypts the record data inputted from the record reconstruction unit 54 by using the encryption key in the key block in accordance with an encryption algorithm of a cipher suite kept in the connection information storage unit 60 to output the decrypted record data to a record analysis unit 57. However, when the encryption state kept in a connection information storage unit 60 is invalid, the record data inputted from the record reconstruction unit 54 is directly outputted to the record analysis unit 57.

The record analysis unit 57 analyzes the record data outputted from the record decryption unit 56 to determine whether or not the message type of the record is of a message type indicating that a handshake message generated by the Handshake Protocol is included and whether or not the message type of the record is of a message type indicating that a change cipher spec message (ChangeCipherSpec) generated by a Change Cipher Spec Protocol is included. In case the record data is of the message type generated by the Handshake Protocol or the Cipher Specification Change Protocol, the record data is outputted to a handshake analysis unit 58. Further, in case the record data is neither of the message type generated by the Handshake Protocol nor of the Cipher Specification Change Protocol, but instead, the type of the record is an application data (ApplicationData), the record data is outputted to a packet standardization unit 63.

The handshake analysis unit 58 analyzes record data outputted from the record analysis unit 57 to output the analysis result to a session information storage unit 59 and the connection information storage unit 60. At this time, the handshake analysis unit 58 has the record data decrypted by a public key encryption process unit 61 if the message type of the record data is "Handshake" and the message type of the handshake is ClientKeyExchange.

The public key encryption process unit 61 decrypts data inputted from the handshake analysis unit 58 by using a secret key set by a secret key setting unit 62, and outputs the decrypted data to the handshake analysis unit 58. Herein, the secret key setting unit 62 is a user interface for setting a secret key of the SSL server 42.

The session information storage unit 59 stores information for identifying a session of the SSL and a master secret key for encryption. Specifically, the session information storage unit 59 stores the IP addresses of the SSL client 41 and the SSL server 42 and the session ID of the SSL as the information for identifying the session.

The connection information storage unit 60 stores informtion for identifying a connection of the SSL Protocol, the cipher suite, the encryption state, and the key block. To be more specific, the connection information storage unit 60 stores the IP addresses of the SSL client 41 and the SSL server 42 and the port numbers. Further, the encryption key, an initial vector and a message authentication key between the SSL client 41 and the SSL server 42 are stored as a key block by the connection information storage unit 60.

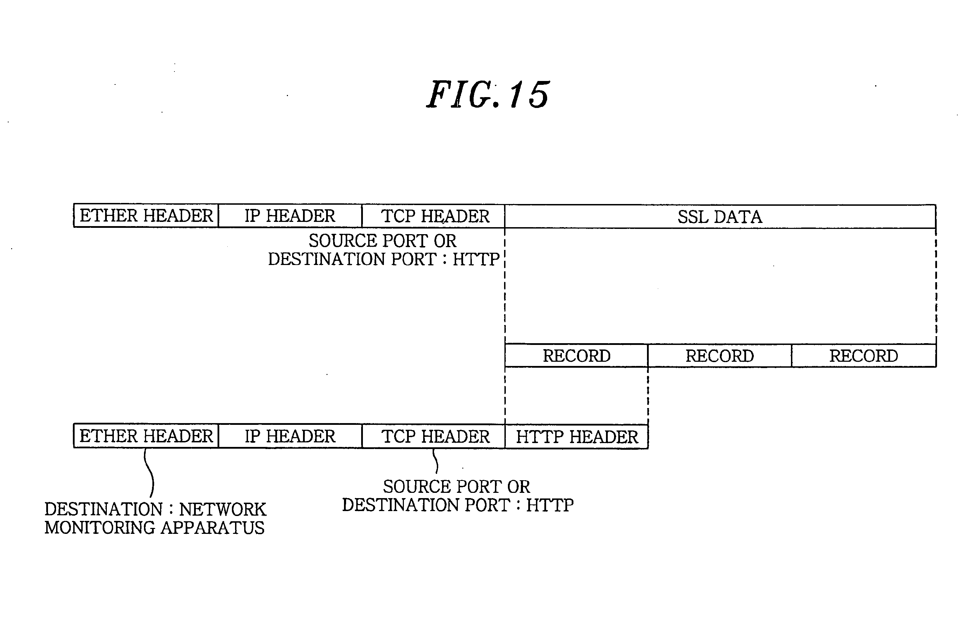

A packet standardization unit 63 standardaizes application data decrypted by the record decryption unit 56 and outputted from the record analysis unit 57 into a data format that can be analyzed by the network monitoring apparatus 4", and outputs the standardized data to a comunications interface 64. Specifically, as shown in Fig. 15, when application data is obtained by the decryption of the SSL data, the application data in the unit of record is divided by the packet standardization unit 63 based on the unit of packet and a data length thereof is adjusted. Then, the IP header, the Ether header and a header in which the TCP destination or source port is set to be "80" representing HTTP are added to the data in the unit of packet, so that it is standardized into a TCP/IP packet in which the destination of the Ethernet is set to be the network monitoring apparatus 4" .

The comunications interface 64 outputs the TCP/IP packet inputted from the packet standardization unit 63 to the network monitoring apparatus 4' '.

### (Operation of the Decryption Apparatus)

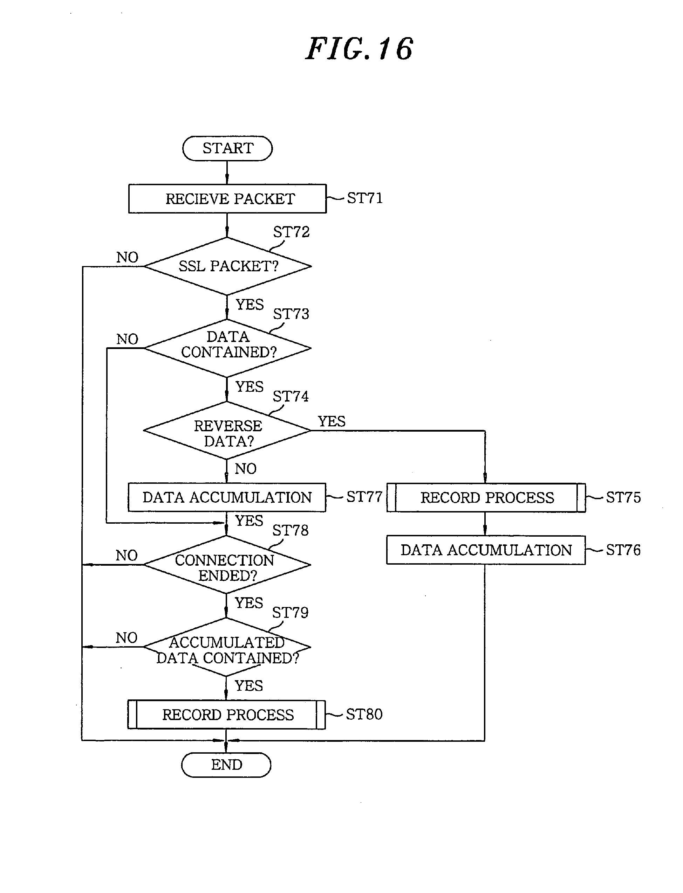

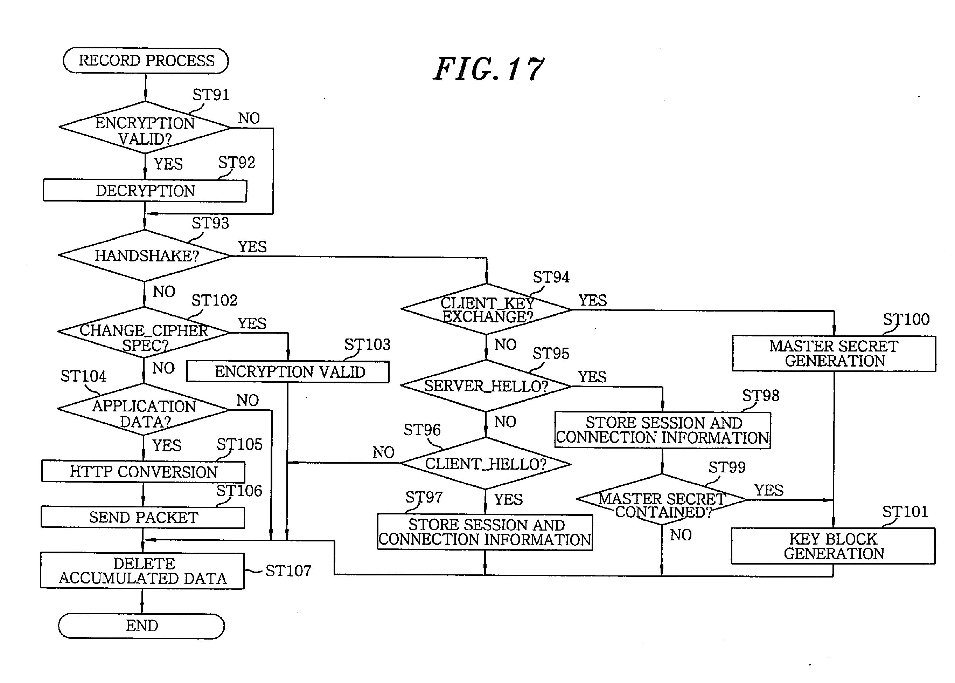

In the following, the operation of the decryption apparatus 44 configured as described above will be described with reference to Figs. 16 and 17.

The network monitoring apparatus 4" reconstructs the record from the IP packet sent and received mainly between the SSL client 41 and the SSL server 42 by performing process as shown in Fig. 16. The process for reconstructing the record is started when the network monitoring apparatus 4" receives the TCP/IP packet sent and received between the SSL client 41 and the SSL server 42.

The decryption apparatus 44 first receives the TCP/IP packet sent and received between the SSL client 41 and the SSL server 42 through the communications interface 51 (step ST71), and then the filter unit 52 determines whether or not the TCP/IP packet is an SSL packet encrypted in accordance with the SSL Protocol (step ST72).

If the TCP/IP packet received by the filter unit 52 is determined to be an SSL packet, the process moves on the step ST73; and if otherwise, the process is terminated. The filter unit 52 determines that the TCP/IP packet is an SSL packet, if a TCP header is added as an upper layer of the IP header, and the IP address and the port number of the destination or the source are same as those set by the filter setting unit 53; and if otherwise, the filter unit 52 determines that the TCP/IP packet is not an SSL packet.

In step ST73, the record reconstruction unit 54 obtains the packet length, the length of the IP header and the length of the TCP header by referring to the packet length field and the header length field in the IP header and the data offset field in the TCP header, and determines whether or not the TCP/IP packet contains data based on a value obtained by subtracting the respective lengths of the IP header and the TCP header from the length of the packet. Then, the record reconstruction unit 54 proceeds to step ST74 if the TCP/IP packet is determined to contain data, and to step ST78 if otherwise.

In step ST74, the record reconstruction unit 54 determines whether or not the data determined to be contained in the TCP/IP packet in step ST73 is of a direction opposite to that of the data on the connection previously accumulated in the record information storage unit 55. That is, if the data accumulated in a preceding execution of the process shown in Fig. 16 is sent from the SSL client 41 to the SSL server 42, the record reconstruction unit 54 checks whether or not the data determined to be contained in the TCP/IP packet in step ST73 is sent from the SSL server 42 to the SSL client 41. On the other hand, if the data accumulated in a preceding execution of the process shown in Fig. 16 is sent from the SSL server 42 to the SSL client 41, the record reconstruction unit 54 checks whether or not the data determined to be contained in the TCP/IP packet in step ST73 are sent from the SSL client 41 to the SSL server 42. Then, if the record reconstruction unit 54 determines that the previously accumulated data are of the opposite direction to the currently received data, the process moves on to step ST75; and if otherwise, the process moves on to step ST77. Further, if there are no data on the connection accumulated in the record information storage unit 55, the record reconstruction unit 54 determines that the previously accumulated data is not of the opposite direction to the currently received data, and so the process moves on to step ST77.

In step ST77, the record reconstruction unit 54 stores the data into the record information storage unit 55 such that the data can be used in a following process. Herein, the record reconstruction unit 54 renders the data to be associated with a sequence number field in the TCP header indicating where the data is sent and received, and copies them into an approproate location to store them in the record information storage unit 55.

Next, in step ST78, the record reconstruction unit 54 refers to a FIN flag in the TCP header, and determines whether or not the connection is terminated by the current data transmission. If it is determined by the record reconstruction unit 54 that the connection is to be terminated, the process moves on the step ST79; and if otherwise, the process is terminated.

In step ST79, the record reconstruction unit 54 determines whether or not the data of the connection are accumulated in the record information storage unit 55. If it is determined that the data of the connection is accumulated, the process moves on the step ST80; and if otherwise, the process is terminated.

In step ST80, the record reconstruction unit 54 divides the data on the connection accumulated in the record information storage unit 55 into the record data in the unit of record by referring to the record header. Then, the record reconstruction unit 54 outputs the record data to the record decryption unit 56. Thereafter, the record process is performed and then the process is terminated. The record process will be described later with reference to Fig. 17.

In step ST75, that is performed if the data contained in the SSL packet received in step ST71 is found in step ST7 4 to be of an opposite direction to the previously accumulated data, a process same as step ST80 is executed. Then, in step ST76, the data is accumulated in the record information storage unit 55 as in step ST77.

According to the sequence described above, the record is reconstructed from the TCP/IP packet sent and received between the SSL client 41 and the SSL server 42. Further, the description on the sequence for reconstructing the record will be omitted for the simplicity of explanation.

In the following, the record process in step ST80 or ST75 described above will be explained with reference to Fig. 17.

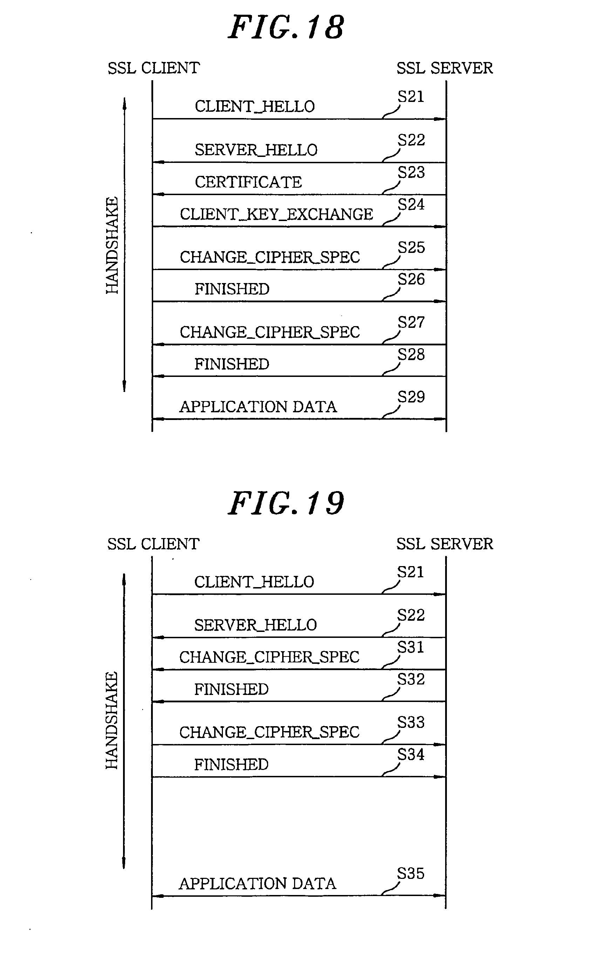

The record process is started after the record being reconstructed by the record reconstruction unit 54. The record process is performed while the SSL packet is sent and received between the SSL client 41 and the SSL server 42 as shown in Fig. 18. In the process shown therein, the key block is generated and the encryption algorithm is compromised between the SSL client 41 and the SSL server 42 in accordance with the Handshake Protocol, and encrypted communications are performed by encrypting the data in the upper layer with the generated key block in accordance with the compromised algorithm. Further, a handshake process shown in Fig. 18 includes a first to a fourth sub-process. Thereafter, an application data process can be performed.

### (The First Sub-Process)

In the first sub-process of the handshake process, the SSL client 41 sends a ClientHello message S21, which is a first message, to the SSL server 42 in accordance with the Handshake Protocol. The ClientHello message S21 includes a client random number, a session ID, a list of a cipher suite, and the like. The cipher suite represents a set of a public key encryption algorithm for use in the key exchange between the SSL client 41 and the SSL server 42, an encryption algorithm for use in the encrypted communications of the application data, lengths of keys used in the encryption algorithm, and a hash algorithm for generating a message authentication code.

When the ClientHello message S21 is intercepted by the decryption apparatus 44 via the hub 43, a record including the ClientHello message S21 is inputted to the record decryption unit 56 in the decryption apparatus 44 to start the record process.

In step ST91 in the record process shown in Fig. 17, the record decryption unit 56 checks the encryption state corresponding. to a direction from the SSL client 41 to the SSL server 42 stored in the connection information storage unit 60. In this case, since the encryption is not yet valid, the process moves on to step ST93.

In step ST93, the record analysis unit 57 determines whether or not the record data received by the record analysis unit 57 is of a message type representing the Handshake Protocol. In this case, since the message included in the record data is the ClientHello message generated by the Handshake Protocol, the record data are outputted to the handshake analysis unit 58 to proceed to step ST94.

In step ST94, the handshake analysis unit 58 checks whether or not the record data inputted in step ST93 is of a message type representing a ClientKeyExchange message. In this case, since the message included in the received record data is not the ClientKeyExchange message, the process moves on to step ST95.

In step ST95, the handshake analysis unit 58 checks whether the received record data is of a message type representing a ServerHello message. In this case, since the message included in the received record data is not the ServerHello message, the process moves on to step ST96.

In step ST96, the handshake analysis unit 58 checks whether or not the received record data is of a message type representing a ClientHello message. In this case, since the message included in the received record data is the ClientHello message, the process moves on to step ST97.

In step ST97, the handshake analysis unit 58 extracts the client random number generated by the SSL client 41 from the record received along with the ClientHello message, and stores it in the connection information storage unit 60. Thereafter, in step ST107, the decryption apparatus 44 deletes the accumulated data stored in the record information storage unit 55 used for the decision making in the latest execution of step ST74.

### (The Second Sub-Process)

In the second sub-process of the handshake process, if the SSL server 42 receives the ClientHellpo message S21 from the SSL client 41, it sends a ServerHello message S22 and then a Certificate message S23 to the SSL client 41 in accordance with the Handshake Protocol. The ServerHello message S22, which is a response message to the ClientHello message S21, includes a server random number generated by the SSL server 42, the session ID, and a cipher suite for use in the subsequent process. Further, the Certificate message S23 is a message for transferring a certificate owned by the SSL server 42 to the SSL client 41, and includes a certificate for the SSL server 42.

When a record including the ServerHello message S22 is inputted to the record decryption unit 56, the record process is started.

In step ST91 in the record process, the record decryption unit 56 checks the encryption state corresponding to communications directed from the SSL server 42 to the SSL client 41 stored in the connection information storage unit 60. In this case, since the encryption is not yet valid, the process moves on to step ST93.

In step ST93, the record analysis unit 57 determines whether or not the record data received by the record analysis unit 57 is of a message type representing the Handshake Protocol. In this case, since the message included in the record data is of a message type representing the Handshake Protocol, the record data is outputted to the handshake analysis unit 58 to proceed to step ST94.

In step ST94, the handshake analysis unit 58 checks whether the record data inputted in step ST93 is of a message type representing a ClientKeyExchange message. In this case, since the message included in the received record data is not the ClientKeyExchange message, the process moves on to step ST95.

In step ST95, the handshake analysis unit 58 checks whether or not the received record data is of a message type representing a ServerHello message. In this case, since the message included in the received record data is the ServerHello message, the process moves on to step ST98.

In step ST98, the handshake analysis unit 58 extracts the server random number generated by the SSL server 42, the session ID, and the cipher suite from the record received along with the ServerHello message. Then, the handshake analysis unit 58 stores the server random number and the cipher suite in the connection information storage unit 60, and stores the session ID in the session information storage unit 59. At this time, in order to render the server random number and the cipher suite stored in the connection information storage unit 60 to be associated with the session ID stored in the session information storage unit 59, the handshake analysis unit 58 makes the information on the connection be linked to the information on the session when storing them in the connection information storage unit 60 and the session information storage unit 59.

In step ST99, it is checked whether or not the session information storage unit 59 has the master secret serving as a common secret key. In this case, since the session information storage unit 59 does not have the master secret, the process moves on to step ST107. Thereafter, in step ST107, the decryption apparatus 44 deletes the accumulated data stored in the record information storage unit 55 used for the decision making in the latest execution of step ST74.

Further, if record data including the Certificate message S23 is inputted to the decryption apparatus 44 subsequently to the ServerHello message S22, the record process is started again.

In step ST91 in the record process, the record decryption unit 56 checks the encryption state corresponding to communications directed from the SSL server 42 to the SSL client 41 stored in the connection information storage unit 60. In this case, since the encryption is not yet valid, the process moves on to step ST93.

In step ST93, the record analysis unit 57 determines whether or not the record data received by the record analysis unit 57 is of a message type representing the Handshake Protocol. In this case, since the message included in the record data is the Certificate message generated by the Handshake Protocol, the record data is outputted to the handshake analysis unit 58 to proceed to step ST94.

In step ST94, the handshake analysis unit 58 checks whether or not the record data inputted in step ST93 is of a message type representing a ClientKeyExchange message. In this case, since the message included in the received record data is not the ClientKeyExchange message, the process moves on to step ST95.

In step ST95, the handshake analysis unit 58 checks whether or not the received record data is of a message type representing a ServerHello message. In this case, since the message included in the received record data is not the ServerHello message, the process moves on to step ST96.

In step ST96, the handshake analysis unit 58 checks whether or not the received record data is of a message type representing a ClientHello message. In this case, since the message included in the received record data is not the ClientHello message, the process moves on to step ST107. Thereafter, in step ST107, the decryption apparatus 44 deletes the accumulated data stored in the record information storage unit 55 used for the decision making in the latest execution of step ST74.

If the SSL client 41 receives the ServerHello message S22 and the Certificate message S23 from the SSL server 42, it investigates the certificate included in the Certificate message. Then, if the certificate is valid, the SSL client 41 generates a random number pre-master secret, and then a master secret serving as a common secret key from the random number pre-master secret, the client random number and the server random number extracted from the ServerHello message S22. Thereafter, the SSL client 41 generates a key block by using the master secret, client random number and the server random number.

### (The Third Sub-Process)

Subsequently, the SSL client 41 sends a ClientKeyExchange message S24 of the Handshake Protocol, a ChangeCipherSpec message S25 of the Change Cipher Spec Protocol, and a Finished message S26 of the Handshake Protocol to the SSL server 42.

The ClientKeyExchange message S24 represents that the random number generated by the SSL client 41 is encrypted by the public key of the SSL server 42, and sent to the SSL server 42. The ClientKeyExchange message S24 includes encrypted data obtained by encrypting the random number pre-master secret by the public key of the SSL server 42 contained in the Certificate of the SSL server 42 included in the Certificate message received from the SSL server 42. The SSL server can generate the master secret by using the encrypted data. Further, the ChangeCipherSpec message S25 is a message for informing that encrypting procedures set by the Handshake Protocol will be started. The ChangeCipherSpec message S25 includes no data. The Finished message of the Handshake Protocol S26 is a message for informing a termination of the Handshake Protocol, and incldues vlaues obtained by performing operations on the Handshake message, the master secret and the like by using a hash function.

Further, the SSL client 41 encrypts a record of the connection including the Finished message S26 to be sent later than the ChangeCipherSpec message S25 by using the encryption key in the key block for a direction from the SSL client 41 to SSL server 42 in accordance with the encryption algorithm of the cipher suite, thereby sending a message.

When a record including the ClientKeyExchange message S24 is inputted to the record decryption unit 56, the record process is started.

In step ST91, the record decryption unit 56 checks the encryption state corresponding to communications directed from the SSL client 41 to the SSL server 42 stored in the connection information storage unit 60. In this case, since the encryption is not yet valid, the process moves on to step ST93.

In step ST93, the record analysis unit 57 determines whether or not the record data received by the record analysis unit 57 is of a message type representing the Handshake Protocol. In this case, since the message included in the record data is of a message type representing the Handshake Protocol, the record data is outputted to the handshake analysis unit 58 to proceed to step ST94.

In step ST94, the handshake analysis unit 58 checks whether or not the record data inputted in step ST93 is of a message type representing a ClientKeyExchange message. In this case, since the message included in the received record data is the ClientKeyExchange message, the process moves on to step ST100.

In step ST100, the handshake analysis unit 58 computes the master secret for the session currently involved, and stores the master secret in the session information storage unit 59. Specifically, the public key encryption processing unit 61 decrypts the data in the ClientKeyExchange message S24 by using the server secret key already set by the secret key setting unit 62 to obtain the random number pre-master secret. Then, the handshake analysis unit 58 generates the master secret by using the random number pre-master secret, the server random number and the client random number stored in the connection information storage unit 60.

In step ST101, the handshake analysis unit 58 generates the key block of the connection. Specifically, the handshake analysis unit 58 generates the key block by using the master secret stored in the session information storage unit 59 and the server random number and the client random number stored in the connection information storage unit 60. Thereafter, in step ST107, the decryption apparatus 44 deletes the accumulated data stored in the record information storage unit 55 used for the decision making in the latest execution of step ST74.

When a record including the ChangeCipherSpec message S 25 generated by the Change Cipher Spec Protocol is inputted to the record decryption unit 56, the record process is started again.

In step ST91, the record decryption unit 56 checks the encryption state corresponding to communications directed from the SSL client 41 to the SSL server 42 stored in the connection information storage unit 60. In this case, since the encryption is not yet valid, the process moves on to step ST93.

In step ST93, the record analysis unit 57 determines whether or not the record data received by the record analysis unit 57 is of a message type representing the Handshake Protocol. In this case, since the message included in the record data is not of a message type representing the Handshake Protocol, the record data is outputted to the handshake analysis unit 58 to proceed to step ST102.

In step ST102, the record analysis unit 57 determines whether or not the received record data is of a message type representing the Change Cipher Spec Protocol. In this case, since the message included in the record data is of a message type representing the Change Cipher Spec Protocol, the process moves on to step ST103.

In step ST103, the encryption state corresponding to communications directed from the SSL client 41 to the SSL server 42 stored in the connection information storage unit 60 is changed into "valid" by the handshake analysis unit 58. Thereafter, in step ST107, the decryption apparatus 44 deletes the accumulated data stored in the record information storage unit 55 used for the decision making in the latest execution of step ST74.

When a record including the Finished message S26 generated by the Change Cipher Spec Protocol is inputted to the record decryption unit 56, the record process is started again.

In step ST91, the record decryption unit 56 checks the encryption state corresponding to communications directed from the SSL client 41 to the SSL server 42 stored in the connection information storage unit 60. In this case, since the encryption is valid as a result of the preceding record process executed when the Change Cipher Spec message S25 was received, the process moves on to step ST92.

In step ST92, the record decryption unit 56 decrypts the record data by using the encryption algorithm of the cipher suite stored in the connection information storage unit 60 and the encryption key of the key block for the direction from the SSL client 41 to the SSL server 42, and outputs the decryption result to the record analysis unit 57.

In step ST93, the record analysis unit 57 determines whether or not the record data received by the record analysis unit 57 is of a message type representing the Handshake Protocol. In this case, since the message included in the record data is the Finished message S26 generated by the Handshake Protocol, the record data is outputted to the handshake analysis unit 58 to proceed to step ST94.

In step ST94, the handshake analysis unit 58 checks whether or not the record data inputted in step ST93 is of a message type representing a ClientKeyExchange message. In this case, since the message included in the received record data is not the ClientKeyExchange message, the process moves on to step ST95.

In step ST95, the handshake analysis unit 58 checks whether or not the received record data is of a message type representing a ServerHello message. In this case, since the message included in the received record data is not the ServerHello message, the process moves on to step ST96.

In step ST96, the handshake analysis unit 58 checks whether or not the received record data is of a message type representing a ClientHello message. In this case, since the message included in the received record data is not the ClientHello message, the process moves on to step ST107. Thereafter, in step ST107, the decryption apparatus 44 deletes the accumulated data stored in the record information storage unit 55 used for the decision making in the latest execution of step ST74.

Meanwhile, if the SSL server 42 receives the ClientKeyExchange message S24 sent by the SSL client 41, it decrypts data including the ClientKeyExchange message S24 by using the server secret key to obtain the random number pre-master secret. Then, the SSL server 42 computes the master secret by using the random number pre-master secret, the client random number and the server random number to generate the key block by using the computed master secret, the client random number and the server random number.

Subsequently, if the SSL server 42 receives the ChangeCipherSpec message S25, it recognizes that the record data of the connection to be received later is to be decrypted by using the encryption key of the key block for communications directed the SSL client 41 to the SSL server 42 in accordance with the encryption algorithm of the cipher suite.

Thereafter, if the SSL server 42 receives the Finished message S26, it decrypts the record including the Finished message S26. By comparing the decrypted result to the value obtained by a same method used by the SSL client 41, the SSL server 42 verifies that no forgery or deception is involved.

### (The Fourth Sub-Process)

Subsequently, the SSL server 42 sends a ChangeCipherSpec message S27 of the Change Cipher Spec Protocol and a Finished message S28 of the Handshake Protocol to the SSL client 41. The ChangeCipherSpec message S27 sent by the SSL server 42 to the SSL client 41 is a response to the ChangeCipherSpec message S25 sent by the SSL client 41. The ChangeCipherSpec message S27 includes no data. Further, the Finished message S28 incldues vlaues obtained by performing operations on the Handshake message, the master secret and the like by using a hash function. Furthermore, messages sent later than the ChangeCipherSpec message S27 is encrypted by the encryption key of the key block for communications directed from the SSL server 42 to the SSL client 41 in accordance with the encryption algorithm of the cipher suite.

If the decryption apparatus 44 receives the ChangeCipherSpec message S27, it inputs the ChangeCipherSpec message S27 to the record decryption unit 56 to start the record process.

In step ST91, the record decryption unit 56 checks the encryption state corresponding to communications directed from the SSL server 42 to the SSL client 41 stored in the connection information storage unit 60. In this case, since the encryption is not yet valid, the process moves on to step ST93.

In step ST93, the record analysis unit 57 determines whether or not the record data received by the record analysis unit 57 is of a message type representing the Handshake Protocol. In this case, since the message included in the record data is not of a message type representing the Handshake Protocol, the process moves on to step ST102.

In step ST102, the record analysis unit 57 determines whether or not the received record data is of a message type representing the Change Cipher Spec Protocol. In this case, since the message included in the record data is of a message type representing the Change Cipher Spec Protocol, the process moves on to step ST103.

In step ST103, the encryption state corresponding to communications directed from the SSL server 42 to the SSL client 41 stored in the connection information storage unit is changed into "valid" by the handshake analysis unit 58. Thereafter, the process moves on to step ST107, so that the decryption apparatus 44 deletes the accumulated data stored in the record information storage unit 55 used for the decision making in the latest execution of step ST74.

When a record including the Finished message S28 is inputted to the record decryption unit 56, the record process is started again.

In step ST91, the record decryption unit 56 checks the encryption state corresponding to communications directed from the SSL server 42 to the SSL client 41 stored in the connection information storage unit 60. In this case, since the encryption is valid as a result of the preceding record process executed when the Change Cipher Spec message S27 was received, the process moves on to step ST92.

In step ST92, the record decryption unit 56 decrypts the record data by using the encryption algorithm of the cipher suite stored in the connection information storage unit 60 and the encryption key of the key block for communications directed from the SSL server 42 to the SSL client 41, and outputs the decryption result to the record analysis unit 57.

In step ST93, the record analysis unit 57 determines whether or not the record data received by the record analysis unit 57 is of a message type representing the Handshake Protocol. In this case, since the message included in the record data is the Finished message S28 generated by the Handshake Protocol, the record data is outputted to the handshake analysis unit 58 to proceed to step ST94.

In step ST94, the handshake analysis unit 58 checks whether or not the record data inputted in step ST93 is of a message type representing a ClientKeyExchange message. In this case, since the message included in the received record data is not the ClientKeyExchange message, the process moves on to step ST95.

In step ST95, the handshake analysis unit 58 checks whether or not the received record data is of a message type representing a ServerHello message. In this case, since the message included in the received record data is not the ServerHello message, the process moves on to step ST96.

In step ST96, the handshake analysis unit 58 checks whether or not the received record data is of a message type representing a ClientHello message. In this case, since the message included in the received record data is not the ClientHello message, the process moves on to step ST107. Thereafter, in step ST107, the decryption apparatus 44 deletes the accumulated data stored in the record information storage unit 55 used for the decision making in the latest execution of step ST74.

Meanwhile, if the SSL client 41 receives the ChangeCipherSpec message S27, it decrypts the record data of the connection to be received later by using the encryption key of the key block for communications directed from the SSL server 42 to the SSL client 41 in accordance with the encryption algorithm of the cipher suite.

Thereafter, if the SSL client 41 receives the Finished message S28, it decrypts the record including the Finished message S28. By comparing the decrypted result to the value obtained by a same method used by the SSL server 42, the SSL client 41 verifies that no forgery or deception is involved.

Thus, the Handshake Protocol between the SSL client 41 and the SSL server 42 is completed. At this time, the SSL client 41, the SSL server 42 and the decryption apparatus 44 are in a same state of the encryption key. In other words, same encryption keys have been generated and the encryptions have been performed in same data lengths in the SSL client 41, the SSL server 42 and the decryption apparatus 44.

### (Application Data Process)

When the Handshake Protocol is completed as described above, it is possible to send and receive application data between the SSL client 41 and the SSL server 42. Specifically, when the SSL client 41 sends application data to the SSL server 42, it divides the application data into record data in the unit of record, encrypts the record data by using the encryption key of the key block for communications directed from the SSL client 41 to the SSL server 42 to send the encrypted result in accordance with the Application Data Protocol.

If the decrption apparatus 44 receives the record generated in accordance with the Application Data Protocol for SSL, the record process is started.

In step ST91 in the record process, the record decryption unit 56 checks the encryption state corresponding to communications directed from the SSL client 41 to the SSL server 42 stored in the connection information storage unit 60. In this case, since the encryption is valid due to the handshake process described above, the process moves on to step ST92.

In step ST92, the record decryption unit 56 decrypts the record data by using the encryption algorithm of the cipher suite stored in the connection information storage unit 60 and the encryption key of the key block for communications directed from the SSL client 41 to the SSL server 42, and outputs the decryption result to the record analysis unit 57.

In step ST93, the record analysis unit 57 determines whether or not the record data received by the record analysis unit 57 is of a message type representing the Handshake Protocol. In this case, since the record data is not generated by the Handshake Protocol, the process moves on to step ST102.

In step ST102, the record analysis unit 57 determines whether or not the received record data is of a message type representing the Change Cipher Spec Protocol. In this case, since the record data is not generated in accordance with the Change Cipher Spec Protocol, the process moves on to step ST104.

In step ST104, the record analysis unit 57 determines whether or not the record data received by the record analysis unit 57 is of a message type corresponding to the Application Data Protocol. In this case, since the received record data is generated in accordance with the Application Data Protocol, the record data is outputted to the packet standardization unit 63 to proceed to step ST105.

In step ST105, the packet standardization unit 63 standardizes a decrypted part of the received record data into a HTTP packet to output the standardized data to the network monitoring apparatus 4" through the comunications interface 64. As shown in Fig. 15, the packet standardization unit 63 adds the IP header and the TCP header of the IP packet received in step ST71 to a head of the decrypted part in the received record data, wherein a destination port of the TCP header is set to be a port number representing HTTP, and the sequence number field, an ACK number field, a length field of the IP header, and the checksum field are recalculated. Thus, the record is standardized into an HTTP packet. Further, if the network monitoring apparauts 4" corresponds to LAN, the packet standardization unit 63 sets the destination of the Ether header to be the address of the network monitoring apparauts 4''.

In step ST106, the HTTP packet standardized by the packet standardization unit 63 is transmitted to the network monitoring apparauts 4" through the communications interface 64. Thereafter, in step ST107, the decryption apparatus 44 deletes the accumulated data stored in the record information storage unit 55 used for the decision making in the latest execution of step ST74.

Thus, it is possible for the network monitoring apparauts 4" to analyze the HTTP packet and, if the content of the HTTP packet is illegitimate, it can be notified to the system administrator.

Further, if the SSL server 42 sends application data to the SSL client 41, the record process is started when the record generated in accordance with the Application Data Protocol is inputted to the record decryption unit 56.

In step ST91 in the record process, the record decryption unit 56 checks the encryption state corresponding to communications directed from the SSL server 42 to the SSL client 41 stored in the connection information storage unit 60. In this case, since the encryption is valid due to the handshake process described above, the process moves on to step ST92.

In step ST92, the record decryption unit 56 decrypts the record data by using the encryption algorithm of the cipher suite stored in the connection information storage unit 60 and the encryption key of the key block for the communications directed from the SSL server 42 to the SSL client 41, and outputs the decryption result to the record analysis unit 57.

In step ST93, the record analysis unit 57 determines whether or not the record data received by the record analysis unit 57 is of a message type representing the Handshake Protocol. In this case, since the record data is not generated in accordance with the Handshake Protocol, the process moves on to step ST102.

In step ST102, the record analysis unit 57 determines whether or not the received data is of a message type representing the Change Cipher Spec Protocol. In this case, since the record data is not generated in accordance with the Change Cipher Spec Protocol, the process moves on to step ST104.

In step ST104, the record analysis unit 57 determines whether or not the record data received by the record analysis unit 57 is of a message type corresponding to the Application Data Protocol. In this case, since the received record data is generated in accordance with the Application Data Protocol, the record data is outputted to the packet standardization unit 63 to proceed to step ST105.

In step ST105, the packet standardization unit 63 standardizes a decrypted part of the received record data into an HTTP packet as described above. Subsequently, in step ST106, the HTTP packet is transmitted to the network monitoring apparauts 4" through the communications interface 64. Thereafter, in step ST107, the decryption apparatus 44 deletes the accumulated data stored in the record information storage unit 55 used for the decision making in the latest execution of step ST74.

Thus, it is possible for the network monitoring apparauts 4" to analyze the HTTP packet and, if the content of the HTTP packet is illegitimate, it can be notified to the system administrator.

As described above, the decryption apparatus 44 decrypts and standardizes the encrypted SSL packet sent and received between the SSL client 41 and the SSL server 42 to output the HTTP packet obtained from the SSL packet to the network monitoring apparatus 4", thereby allowing the network monitoring apparatus 4" to monitor the packet.

### (Session Restart)

Further, since an existing session can be reused when establishing a connection of the SSL Protocol, a session can be restarted by reusing a master secret generated when a preceding connection was established. In the following, a restart of a session in SSL will be described with reference to Fig. 19, and an operation of the decryption apparatus 44 for the restart of the session will also be described.

In the session restart process, first, the SSL client 41 sends the ClientHello message S21 to the SSL server 42 as in the first sub-process described above, and the decryption apparatus 44 performs a same process as in the first sub-process. Thereafter, the session restart process moves on to a second session restart sub-process by the SSL server 42 by sending the ServerHello message S22, a ChangeCipherSpec message S31 and a Finished message S32 to the SSL client 41.

### (The Second Session Restart Sub-Process)

If the SSL server 42 receives the ClientHello message S21 from the SSL client 41, it sends a ServerHello message S22 of the Handshake Protocol, a ChangeCipherSpec message S31 of the Change Cipher Spec Protocol, and a Finished message S32 of the Handshake Protocol to the SSL client 41.

Meanwhile, the SSL server 42 generates a key block by using the master secret created when a preceding connection was established, the client random number received from the SSL client 41 and the server random number sent to the SSL client 41.

If a record including the ServerHello message S22 is inputted to the record decryption unit 56, the record process is started.

In step ST91 in the record process, the record decryption unit 56 checks the encryption state corresponding to communications directed from the SSL server 42 to the SSL client 41 stored in the connection information storage unit 60. In this case, since the encryption is not yet valid, the process moves on to step ST93.

In step ST93, the record analysis unit 57 determines whether or not the record data received by the record analysis unit 57 is of a message type representing the Handshake Protocol. In this case, since the message included in the record data is the ServerHello message generated in accordance with the Handshake Protocol, the record data is outputted to the handshake analysis unit 58 to proceed to step ST94.

In step ST94, the handshake analysis unit 58 checks whether or not the record data inputted in step ST93 is of a message type representing a ClientKeyExchange message. In this case, since the message included in the received record data is not the ClientKeyExchange message, the process moves on to step ST95.

In step ST95, the handshake analysis unit 58 checks whether or not the received record data is of a message type representing a ServerHello message. In this case, since the message included in the received record data is the ServerHello message, the process moves on to step ST98.

In step ST98, the handshake analysis unit 58 extracts the server random number, the session ID, and the cipher suite from the record received by the handshake analysis unit 58. Then, the handshake analysis unit 58 stores the server random number and the cipher suite in the connection information storage unit 60, and stores the session ID in the session information storage unit 59. At this time, in order to render the server random number and the cipher suite stored in the connection information storage unit 60 to be associated with the session ID stored in the session information storage unit 59, the handshake analysis unit 58 makes the information on the connection be linked to the information on the session when storing them in the connection information storage unit 60 and the session information storage unit 59.

In step ST99, it is checked whether or not the session information storage unit 59 has the master secret serving as a common secret key. In this case, since the session information storage unit 59 has the master secret, the process moves on to step ST101.

In step ST101, the handshake analysis unit 58 generates the key block of the connection. Specifically, the handshake analysis unit 58 generates the key block by using the master secret stored in the session information storage unit 59, and the server random number and the client random number stored in the connection information storage unit 60.

Thereafter, if the decryption apparatus 44 receives the ChangeCipherSpec message S31 and the Finished message S32, it performs a same process as the one performed when the decryption apparatus 44 received the ChangeCipherSpec message S27 and the Finished message S28 in the fourth sub-process described above.

If the SSL client 41 receives the ServerHello message S22 from the SSL server 42, it generates the key block by using the master secret created when the preceding connection was established, the server random number and the client random number.

Further, if the SSL client 41 receives the ChangeCipherSpec message S31, it decrypts the record data of the connection to be received later by using the encryption key of the key block for communications directed from the SSL server 42 to the SSL client 41 in accordance with the encryption algorithm of the cipher suite.

Thereafter, if the SSL client 41 receives the Finished message S32, it decrypts the record including the Finished message S32. By comparing the decrypted result to the value obtained by a same method used by the SSL server 42, the SSL client 41 verifies that no forgery or deception is involved.

### (The Third Session Restart Sub-Process)

Thereafter, the SSL client 41 sends a ChangeCipherSpec message S33 of the Change Cipher Spec Protocol and a Finished message S34 of the Handshake Protocol to the SSL server 42.

If a record including the ChangeCipherSpec message S33 of the Change Cipher Spec Protocol is inputted to the record decryption unit 56, the record process is started again.

In step ST91 in the record process, the record decryption unit 56 checks the encryption state corresponding to communications directed from the SSL client 41 to the SSL server 42 stored in the connection information storage unit 60. In this case, since the encryption is not yet valid, the process moves on to step ST93.

In step ST93, the record analysis unit 57 determines whether or not the record data received by the record analysis unit 57 is of a message type representing the Handshake Protocol. In this case, since the record data is not generated in accordance with the Handshake Protocol, the process moves on to step ST102.

In step ST102, the record analysis unit 57 determines whether the received record data is of a message type representing the Change Cipher Spec Protocol. In this case, since the message included in the record data is of a message type representing the Change Cipher Spec Protocol, the process moves on to step ST103.

In step ST103, the encryption state corresponding to communications directed from the SSL client 41 to the SSL server 42 stored in the connection information storage unit is changed into "valid" by the handshake analysis unit 58.

When a record including the Finished message S34 is inputted to the record decryption unit 56, the record process is started again.

In step ST91, the record decryption unit 56 checks the encryption state for communications from the SSL client 41 to the SSL server 42 stored in the connection information storage unit 60. In this case, since the encryption is valid, the process moves on to step ST92.

In step ST92, the record decryption unit 56 decrypts the record data by using the encryption algorithm of the cipher suite stored in the connection information storage unit 60 and the encryption key of the key block for communications from the SSL client 41 to the SSL server 42, and outputs the decryption result to the record analysis unit 57.

In step ST93, the record analysis unit 57 determines whether or not the record data received by the record analysis unit 57 is of a message type representing the Handshake Protocol. In this case, since the message included in the record data is generated in accordance with the Handshake Protocol, the record data is outputted to the handshake analysis unit 58 to proceed to step ST94.

In step ST94, the handshake analysis unit 58 checks whether or not the record data inputted in step ST93 are of a message type representing a ClientKeyExchange message. In this case, since the message included in the received record data is not the ClientKeyExchange message, the process moves on to step ST95.

In step ST95, the handshake analysis unit 58 checks whether or not the received record data is of a message type representing a ServerHello message. In this case, since the message included in the received record data is not the ServerHello message, the process moves on to step ST96.

In step ST96, the handshake analysis unit 58 checks whether or not the received record data is of a message type representing a ClientHello message. In this case, since the message included in the received record data is not the ClientHello message, the process is terminated.

Meanwhile, if the SSL server 42 receives the ChangeCipherSpec message S33, it decrypts the record data of the connection to be received later by using the encryption key of the key block for communications directed from the SSL client 41 to the SSL server 42 in accordance with the encryption algorithm of the cipher suite.

Thereafter, if the SSL server 42 receives the Finished message S34, it decrypts the record including the Finished message S34. By comparing the decrypted result to the value obtained by a same method used by the SSL client 41, the SSL server 42 can verify that no forgery or deception is involved. Thus, the session restart process is terminated, so that the application process can be performed while the decryption appaartus 44 and the network monitoring apparatus 4" start to monitor the content of the communications by SSL packets.

As described above, in accordance with the decryption apparatus of the present invention, the encryption key and the encryption algorithm are stored therein as information needed for the decryption of the encrypted communications and the decrypted packet is standardized into a form that can be processed by the monitoring apparatus to let the monitoring apparatus monitor the contents of the communications. Thus, by using an existing monitoring apparatus, it is possible to monitor the contents of the communications even if the contents are encrypted, as long as the existing monitoring apparatus can analyze data in a plain text form. Moreover, in accordance with this communications system, the decrypted packet can be monitored before transmitted to the first or second communications apparatus. Thus, the security level of the encrypted communications system can be maintained without being deteriorated.

While the invention has been shown and described with respect to the preferred embodiment, it will be understood by those skilled in the art that various changes and modification may be made without departing from the scope of the invention as defined in the following claims.

## Claims

1. A decryption apparatus for use in encrypted communications installed between a first communications apparatus and a second communications apparatus to transmit and receive encrypted packets therebetween and allowing a monitoring apparatus to monitor contents of the transmitted and received packets, comprising:
a storage unit for storing first key information for decrypting a packet transmitted from the first communications apparatus and encrypting a packet to be transmitted thereto, second key information for decrypting a packet received from the second communications apparatus and encrypting a packet to be transmitted thereto, and an encryption algorithm using the first and the second key information;
a relay unit for decrypting a first packet received from the first communications apparatus by using the first key information and encrypting a decrypted first packet by using the second key information according to the encryption algorithm and then transmitting an encrypted first packet to the second communications apparatus, and decrypting a second packet received from the second communications apparatus by using the second key information and encrypting a decrypted second packet by using the first key information according to the encryption algorithm and then transmitting an encrypted second packet to the first communications; and
an output unit for standardizing a decrypted packet produced by the relay unit to provide the monitoring apparatus with a standardized decrypted packet of a form capable of being processed by the monitoring apparatus, thereby allowing the monitoring apparatus to monitor contents of the standardized decrypted packet.

2. The decryption apparatus of claim 1, wherein the output unit produces the standardized packet by setting an address of the monitoring apparatus as a destination of the decrypted packet, extracting a header and a trailer needed for an encryption process and a decryption process from headers and trailers appended to the decrypted packet, and replacing next header protocol information contained in a header appended in front of the decrypted packet with next header protocol information contained in the extracted header or trailer.

3. The decryption apparatus of claim 1, further comprising:
an input unit for inputting process information on a process to be performed before the decrypted packet is encrypted, and
wherein the relay unit performs the process on the decrypted packet based on the process information inputted by the input unit and then encrypts the thus processed decrypted packet by using the first or second key information to thereby transmit the thus encrypted packet to the first or second communications apparatus.

4. The decryption apparatus of claim 1, wherein one of the communications apparatuses is an initiating communications apparatus and the other thereof is a responding communications apparatus, and the decryption apparatus further comprising a key generation unit for generating the first key information and the second key information,
wherein the key generation unit includes:
a key sharing data storage subunit for storing selected numbers on which the decryption apparatus and the initiating and the responding communications apparatus agreed in advance;
a secret key generation subunit for generating a random number to create a secret key;
a public key generation subunit for generating a public key by using the secret key and the selected numbers; and
a common secret key generation subunit for generating a common secret key by using a public key received from the initiating or the responding communications apparatus, the secret key, and the selected number, and
wherein, when a key exchange is performed between the initiating and the responding communications apparatus, the secret key generation subunit generates an initiator's side secret key on behalf of the responding communications apparatus and a responder's side secret key on behalf of the initiating communications apparatus,
the public key generation subunit generates an initiator's side public key on behalf of the responding communications apparatus by using the initiator's side secret key and an responder's side public key by using the responder's side secret key on behalf of the initiating communications apparatus,
the initiator's side public key that is equivalent to a responder's public key is sent to the initiating communications apparatus and the responder's side public key that is equivalent to an initiator's public key is sent to the responding communications apparatus,
the common secret key generation subunit generates a responder's side common secret key by using the initiator's side secret key created by the secret key generation subunit and a responder's public key received from the responding communications apparatus, and also generates an initiator's common secret key by using the responder's side secret key created by the secret key generation subunit and an initiator's public key received from the initiating communications apparatus, and
the storage unit stores the responder's side common secret key as one of the first and the second key information, and also stores the initiator's side common secret key as the other of the first and the second key information.

5. The decryption apparatus of claim 1, wherein the relay unit encrypts the decrypted packet produced to be outputted from the output unit to the monitoring apparatus and relays a thus encrypted packet after if a monitoring result that the relay unit receives from the monitoring apparatus indicates that a packet outputted from the output unit to the monitoring apparatus is a legitimate packet; and the relay unit stops relaying the decrypted packet produced to be outputted from the output unit to the monitoring apparatus if the monitoring result that the relay unit receives from the monitoring apparatus indicates that the packet outputted from the output unit to the monitoring apparatus is an illegitimate packet.

6. The decryption apparatus of claim 1, wherein, if the relay unit receives a packet outputted from the output unit and then processed by the monitoring apparatus, the relay unit encrypts and then relays a thus received packet.

7. A decryption apparatus for use in encrypted communications, wherein the decryption apparatus intercepts encrypted packets transmitted and received between a first communications apparatus and a second communications apparatus through a relay apparatus installed on a communications path therebetween to have a monitoring apparatus monitor contents of the encrypted packets, comprising:
a storage unit for storing first key information for decrypting a packet sent from the first communications apparatus to the second communications apparatus, second key information for decrypting a packet sent from the second communications apparatus to the first communications apparatus, and an encryption algorithm using the first and the second key information;
a decryption unit for decrypting the packet received from the first communications apparatus by using the first key information according to the encryption algorithm, and decrypting the packet received from the second communications apparatus by using the second key information according to the encryption algorithm; and
an output unit for standardizing a decrypted packet produced by the decryption unit to provide the monitoring apparatus with a standardized packet of a form capable of being processed by the monitoring apparatus, thereby allowing the monitoring apparatus to monitor contents of the standardized packet.

8. The decryption apparatus of claim 7, wherein the output unit adjusts data of the decrypted packet to have a data length capable of being processed by the monitoring apparatus, and generates a new packet by appending to adjusted data a header including protocol information of the adjusted data and an address of the monitoring apparatus set as a destination of the new packet, thereby standardizing the decrypted packet to produce the standardized packet of the form capable of being processed by the monitoring apparatus.

9. The decryption apparatus of claim 7, further comprising:
a secret key setting unit for setting secret keys for the first and second communications apparatus to be used in creating the first and the second key information; and
a key generation unit for intercepting information packets required for negotiating and determining the first key information, the second key information and the encryption algorithm between the first and the second communications apparatus, generating the first key information and the second key information, and determining the encryption algorithm based on intercepted packets and the secret keys.
